# EUROPEAN PATENT APPLICATION

(11) **EP 4 844 688 A1**
(43) Date of publication of application: **25.11.2026**
(21) Application number: 25798273.6
(22) Date of filing: 21.01.2025
(51) Int. Cl.: G06T 11/60, G06T 7/11, G06T 7/194, G06T 5/77, G06N 3/0475

(54) **METHOD FOR EDITING IMAGE AND ELECTRONIC DEVICE FOR PERFORMING SAME**

(30) Priority: 29.04.2024 KR 20240057203; 23.08.2024 KR 20240113708
(71) Applicant: Samsung Electronics Co., Ltd., Suwon-si, Gyeonggi-do 16677 (KR)
(72) Inventor: JEON, Boseong, Suwon-si, Gyeonggi-do 16677 (KR); KWON, Jungmin, Suwon-si, Gyeonggi-do 16677 (KR); AHN, Beomjin, Suwon-si, Gyeonggi-do 16677 (KR); LEE, Tammy, Suwon-si, Gyeonggi-do 16677 (KR)
(74) Representative: Gulde & Partner
(86) International application number: PCT/KR2025/099114
(87) International publication number: WO 2025/230384

(57) **Abstract**

Provided is a method by which an electronic device edits an image. The method may comprise the steps of: acquiring an input for designating a portion of an input image as a target region; acquiring a user's intent for editing the image of the target region; acquiring, from a database, an embedding corresponding to the user's intent; editing the image of the target region through a generative model by using the acquired embedding; and outputting a result image in which the image of the target region has been generated, wherein an embedding corresponding to at least one intent may be pre-stored in the database.

## Description

### Technical Field

An embodiment of the present disclosure relates to a method of editing an image, and an electronic device and a server for performing the method.

### Background Art

Generative artificial intelligence (Al) is a technology that learns structures and patterns of large-scale data and generates new synthetic data based on input data. The generative Al generates human-level results in various tasks relating to text, images, speech, video, music, and the like. For example, an image generative model generates a new image based on given data (e.g., text or an image).

However, when an image generative model edits an image by reflecting the intent of a user based on a text prompt, a large amount of memory is consumed and computation time increases due to a text encoder for processing the prompt. In addition, when a generative model uses a scalar-type guidance scale, it is difficult to reflect a plurality of intents of a user in one image through a single inference.

Furthermore, to edit an image by reflecting an intent, prompt engineering must be performed to write a prompt in a manner that the generative model can understand, and thus, it is difficult for a general user to obtain a desired image by editing an image using the generative model.

### Disclosure of Invention

### Solution to Problem

According to an aspect of the present disclosure, a method, performed by an electronic device, of editing an image may be provided. The method may include obtaining an input for designating, as a target region, a partial region of an input image. The method may include obtaining an intent of a user to edit an image of the target region. The method may include obtaining, from a database, an embedding corresponding to the intent of the user. The method may include editing the image of the target region through a generative model by using the obtained embedding. The method may include outputting a result image in which the image of the target region has been generated. An embedding corresponding to at least one intent may be pre-stored in the database.

According to an aspect of the present disclosure, an electronic device for editing an image may be provided. The electronic device may include a communication interface, at least one processor including a circuit device, and memory storing instructions. The instructions, when executed by the at least one processor, may cause the electronic device to obtain an input for designating, as a target region, a partial region of an input image. The instructions, when executed by the at least one processor, may cause the electronic device to obtain an intent of a user to edit an image of the target region. The instructions, when executed by the at least one processor, may cause the electronic device to obtain, from a database, an embedding corresponding to the intent of the user. The instructions, when executed by the at least one processor, may cause the electronic device to edit the image of the target region through a generative model by using the obtained embedding. The instructions, when executed by the at least one processor, may cause the electronic device to output a result image in which the image of the target region has been generated. An embedding corresponding to at least one intent may be pre-stored in the database.

According to an aspect of the present disclosure, a computer-readable recording medium having recorded thereon a program for executing any one of the methods described above and below, in which an electronic device and/or a server generates and provides a composite image, may be provided.

### Brief Description of Drawings

FIG. 1 is a diagram for explaining modules included in an electronic device according to an embodiment of the present disclosure.
FIG. 2 is a diagram illustrating an example of a method by which a generative model edits an image, according to an embodiment of the present disclosure.
FIG. 3 is a block diagram illustrating a configuration of an electronic device, according to an embodiment of the present disclosure.
FIGS. 4A and 4B are diagrams for explaining detailed modules included in a target region designation module of FIG. 1.
FIGS. 5A and 5B are diagrams for explaining a method of obtaining a target region and an intent of a user, according to an embodiment of the present disclosure, based on FIG. 4A.
FIGS. 6A and 6B are diagrams for explaining a method of obtaining a target region and an intent of a user, according to an embodiment of the present disclosure, based on FIG. 4B.
FIG. 7 is a diagram for explaining a method by which an electronic device edits an image by using a generative model, according to an embodiment of the present disclosure.
FIG. 8 is a flowchart for explaining a method by which an electronic device edits an image by using a generative model, according to an embodiment of the present disclosure.
FIG. 9 is a flowchart for explaining detailed operations included in operation S810 of FIG. 8.
FIG. 10 is a diagram for explaining a process in which a foreground creation embedding is trained, according to an embodiment of the present disclosure.
FIG. 11 is a diagram illustrating examples of a masked image and a mask used in a process in which a foreground creation embedding is trained, according to an embodiment of the present disclosure.
FIG. 12 is a diagram for explaining a process in which a second electronic device optimizes a foreground creation embedding and a generative model, according to an embodiment of the present disclosure.
FIG. 13 is a diagram for explaining a process in which a foreground removal embedding is trained, according to an embodiment of the present disclosure.
FIG. 14 is a diagram illustrating examples of a masked image and a mask used in a process in which a foreground removal embedding is trained, according to an embodiment of the present disclosure.
FIG. 15 is a diagram for explaining a process in which a second electronic device optimizes a foreground removal embedding and a generative model, according to an embodiment of the present disclosure.
FIG. 16 is a diagram for explaining a process of editing an image by creating a foreground of a specific class and filling a target region with the foreground, according to an embodiment of the present disclosure.
FIG. 17 is a diagram for explaining a process in which a class embedding is trained, according to an embodiment of the present disclosure.
FIG. 18 is a diagram for illustrating an example of editing an image by using a class embedding, according to an embodiment of the present disclosure.
FIG. 19 is a flowchart for explaining an electronic device operating in conjunction with a server, according to an embodiment of the present disclosure.
FIG. 20 is a block diagram illustrating a configuration of a server, according to an embodiment of the present disclosure.

### Mode for the Invention

The terms used in the specification will be briefly defined, and the present disclosure will be described in detail. In the present disclosure, the expression "at least one of a, b, or c" may indicate "a", "b", "c", "a and b", "a and c", "b and c", "all of a, b, and c", or variations thereof.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description. Therefore, the terms used in the present disclosure should be defined based on the meaning of the terms and the descriptions throughout the present disclosure, rather than simple names of the terms.

An expression expressed in the singular may encompass an expression in the plural, unless it has a clearly different meaning in the context. The terms used herein, including technical or scientific terms, may have the same meanings as those commonly understood by one of ordinary skill in the art described in the present specification. Further, the terms including ordinal numbers such as "first", "second", and the like used in the present specification may be used to describe various components, but the components should not be limited by the terms. The above terms are used only to distinguish one component from another.

When a part "includes" or "comprises" an element, unless there is a particular description contrary thereto, the part may further include other elements, not excluding the other elements. In addition, terms such as "unit" and "module" described in the specification denote a unit that processes at least one function or operation, which may be implemented in hardware or software, or implemented in a combination of hardware and software.

Hereinafter, embodiments of the present disclosure will be described in detail with reference to the accompanying drawings such that one of ordinary skill in the art may easily implement the embodiments of the present disclosure. However, the present disclosure may be implemented in various different forms and is not limited to the embodiment described herein. Also, in the drawings, parts irrelevant to the description are omitted in order to clearly describe the present disclosure, and like reference numerals designate like elements throughout the specification.

While describing the present disclosure, technical content that is well-known in the art and not directly related to the present disclosure will not be provided. By omitting the unnecessary description, the gist of the present disclosure may be more clearly conveyed without obscuring the subject matter. Also, terms used below are defined in consideration of functions in the present disclosure, and may have different meanings according to an intention of a user or operator, customs, or the like. Therefore, the terms used herein have to be defined based on the meaning of the terms together with the description throughout the specification.

Some elements are exaggerated, omitted, or schematically illustrated in drawings. Also, the size of each component does not completely reflect the actual size. In the drawings, like elements are denoted by like reference numerals.

The advantages and features of the present disclosure and methods of achieving them will become apparent with reference to embodiments described in detail below with reference to the accompanying drawings. However, the present disclosure is not limited to the embodiments described below, and may be implemented in other various different forms. The embodiments are provided to complete the present disclosure and to fully inform one of ordinary skill in the art of the scope of the present disclosure. An embodiment of the present disclosure may be defined according to claims. Throughout the specification, like reference numerals denote like elements. While describing an embodiment the present disclosure, detailed description of related well-known functions or configurations may be omitted when it is deemed that they may unnecessarily obscure the essence of the present disclosure. Also, terms used below are defined in consideration of functions in the present disclosure, and may have different meanings according to an intention of a user or operator, customs, or the like. Therefore, the terms used herein have to be defined based on the meaning of the terms together with the description throughout the specification.

In an embodiment, blocks in flowcharts or combinations of the flowcharts may be performed by computer program instructions. The computer program instructions may be loaded into a processor of a general-purpose computer, special purpose computer, or other programmable data processing apparatus, and the instructions, which are executed via the processor of the computer or programmable data processing apparatus may generate means for implementing functions specified in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s). The computer program instructions may be mounted on a computer or another programmable data processing apparatus.

In addition, each block of the flowchart may represent a portion of a module, segment, or code that includes one or more executable instructions for executing specified logical function(s). In an embodiment, functions described in the blocks may be performed out of order. For example, two blocks illustrated successively may be executed substantially concurrently, or may be performed in a reverse order according to a function.

Embodiments of the present disclosure relate to a method of editing an image by using a generative model. Prior to describing specific embodiments, the meanings of terms frequently used in the present specification will be defined.

In an embodiment of the present disclosure, the term "generative artificial intelligence (Al)" may refer to artificial intelligence technology capable of generating new text, images, and the like in response to input data (e.g., text and images). A representative example of generative Al will be described in a "Generative Model" section below.

In an embodiment of the present disclosure, the term "generative model" may refer to a neural network model that implements generative Al technology. The generative model may generate new data having features similar to input data, or new data corresponding to the input data by learning patterns and structures of training data. For example, when the input data is an image and the generative model is requested to edit the image, the generative model may generate a new image in a target region of an original image while maintaining content or style of the original image. For example, an object in the target region of the original image may be removed, and a new object may be generated. For example, an object in the target region of the original image may be removed, and the region may be filled with a background.

The generative model in the present disclosure may be implemented based on a diffusion model. In an embodiment of the present disclosure, the diffusion model may be an example of a generative model that processes input data to generate new data. The diffusion model may be implemented using various deep neural network architectures and algorithms that employ a diffusion process, or may be implemented through variations of various deep neural network architectures and algorithms that employ a diffusion process. The diffusion model may refer to a model that learns features of an image through a forward diffusion process of adding noise to an original image for each time step, and a backward diffusion process of reconstructing the original image by denoising a noise image again for each time step.

In an embodiment of the present disclosure, the term "foreground" may include a major or central portion in an image. The foreground may include a major portion in the image according to a preset intent or an intent of a user. The foreground may include a region of interest among an entire region of the image. The foreground may include a visually important portion in the image. For example, the foreground may include an object or subject of high importance, a central element, or a focal element in the image. The foreground may include a person, an animal, an object, or the like in a photograph or a picture. For example, in a photograph of "a car parked in a parking lot", the foreground may include the "car".

In an embodiment of the present disclosure, the term "background" may include a non-major or non-central portion in an image. The background may include a peripheral region of a central object in the image. The background may include a region excluding a foreground among the entire region of the image. For example, the background may include a background region, a peripheral region, an auxiliary region, or the like. According to various embodiments, a region representing the background may be used as a main region, based on a preset intent or an intent of a user. For example, the background may be a region representing the overall context of a scene, or an environment, place, or the like in which a foreground is located. For example, in a photograph of "a car parked in a parking lot", the background may include the "parking lot".

In an embodiment of the present disclosure, "foreground creation" may indicate creating a foreground and editing (or filling) an image with respect to a target region. For example, the foreground creation may indicate filling a masked region (for example, a target region) of a masked image with a foreground. The foreground creation may be replaced with making, filling, or foreground filling. For example, the foreground creation may indicate generating a plausible object in a masked region of an image.

In an embodiment of the present disclosure, the foreground creation may indicate filling the inside of a mask of a masked image in consideration of a context of an image and a shape of the mask. For example, the foreground creation may indicate filling the inside of a mask of a masked image with a plausible object in consideration of a context of an unmasked peripheral region and a shape of the mask.

For example, when performing the foreground creation on an image in which a foreground region is masked, an object suitable for the foreground region may be generated to fill a foreground region mask in consideration of a context of the image and a shape of the foreground region mask, thereby editing the image.

In an embodiment of the present disclosure, a context of an image may indicate an environment or situation constituting the image. For example, the context may include a background of the image, a color and lighting of the image, a place where the image is captured, a time, a situation (for example, an event or activity) depicted by the image, an environment, an object included in the image, an arrangement or positional relationship of objects, a motion of an object, or an interaction between objects.

In an embodiment of the present disclosure, a shape of a mask may indicate a size and/or a form of the mask.

For example, in an image in which vehicles are parked in a parking lot, when a mask having a size and form similar to a vehicle is designated at a location where one vehicle can be parked, "foreground creation" may be performed by generating a vehicle, which is a plausible object, and filling the inside of a masked image in consideration of a context of the parking lot in which vehicles are parked, a context that the mask is designated at the location where one vehicle can be parked, and the form of the mask that the mask having the size and form similar to a vehicle is designated.

In an embodiment of the present disclosure, foreground removal may indicate editing an image with respect to a target region by extending a background. For example, the foreground removal may indicate filling a masked region (for example, a target region) of a masked image with a background. The foreground removal may be replaced with removal or filling with a background.

The foreground removal may indicate erasing an undesired object, element, or region from an image and filling the same with a background. When the foreground removal is performed on a target region of an image, a portion occupied by the target region in the input image may be replaced with an image that naturally blends with a surrounding background. When the foreground removal is performed on the target region, an object included in the target region may appear as if it had never existed in the first place.

For example, the foreground removal may indicate removing a foreground of a selected region and filling the region from which the foreground has been removed by extending a background. In an embodiment of the present disclosure, the region from which the foreground has been removed may be filled by using pixel information of a peripheral region or background. For example, an empty portion of the removed region may be filled through image inpainting. In the above description about the foreground removal, the foreground removal for a region has been described as an example, but this may be equally applied to foreground removal for an element or an object.

In an embodiment of the present disclosure, an "intent" may indicate a purpose or goal that a user intends to achieve through a model. The term such as a "goal", a "purpose", a "request", or an "inquiry" may be used instead of the 'intent'. For example, in a generative model for editing an image, an intent may include image inpainting, image outpainting, image high-resolution, text to image generation, or the like.

In an embodiment of the present disclosure, the "intent" may correspond to the "foreground creation" or the "foreground removal" described above. A foreground creation intent may indicate an intent to perform foreground creation. A foreground removal intent may indicate an intent to perform foreground removal.

A user may convey an "intent" to a model in any manner. For example, the user may convey the intent to the model through a prompt. The prompt is a sentence or keyword for interaction between the user and the model, and may be text for the user to convey a question or command to the model. In other words, the prompt may indicate an input in text or another form that guides a type of output the model needs to generate. When the prompt is input to a generative model, the generative model may perform an operation to generate a result corresponding to the prompt.

A user may input a prompt and an image to a model. In this case, the prompt may be text for conveying a method of editing the image input by the user. In other words, the prompt may indicate an input in text or another form that guides a region to be edited by the model, a type of image the model needs to generate and output, or the like.

A user may convey an intent through a user interface (UI) of an electronic device corresponding to a prompt. The UI may indicate elements of the electronic device for the user to interact with the electronic device. For example, the UI may include an icon, a button, an image, text, and the like within a screen of the electronic device.

In an embodiment of the present disclosure, a user may input an image to a model and input, to the model, an intent to edit the input image through a UI of an electronic device corresponding to a prompt. In this case, the user may select a method of editing the image through the UI.

For example, when the user inputs an image, designates a target region of the image, and then selects (or touches, clicks, or designates) an icon on which "foreground creation" is written, an intent to create a foreground in the target region of the image may be input to the model.

When an intent is input to a model through a UI, an operation for processing a text prompt does not need to be performed, and thus, a processing speed may be increased and an amount of computation may be reduced. For example, an operation using a text encoder for processing the text prompt may not be performed. In addition, an image may be edited by reflecting the intent of the user even without a text prompt.

In an embodiment of the present disclosure, a "target region" may include a portion designated in an image according to a preset intent or an intent of a user. The target region may include at least one of a region in which foreground creation is performed or a region in which foreground removal is performed, according to the intent of the user, from among the entire region of the image.

An intent of a user to perform foreground creation or foreground removal may be designated for each target region after a target region is designated. The intent of the user to perform foreground creation or foreground removal may be designated for each target region simultaneously with the designation of the target region.

For example, it may be designated to perform foreground creation for a first target region and foreground removal for a second target region after the first target region and the second target region are designated, or the first target region may be designated as a region in which foreground creation is performed and the second target region may be designated as a region in which foreground removal is performed when the first target region and the second target region are designated.

A target region may be a region corresponding to a foreground of an image or may be a region corresponding to a background of the image. The target region may be a region including both the foreground and the background of the image, a region including a portion of the foreground and a portion of the background, a region including the foreground and a portion of the background, or a region including a portion of the foreground and the background. That is, the target region may be designated within the image without limitation. The target region may be a plurality of regions. The target region may include a region of interest, an object of interest, an object region, a target object, or the like.

In an embodiment of the present disclosure, an "embedding" may refer to a value obtained by converting text (e.g., a word or a sentence) data into a low-dimensional vector. A generative model may understand and process a meaning corresponding to the text data through the embedding.

Specifically, when the embedding is input as a condition to the generative model, the generative model may add the embedding to an attention mechanism to edit an image by reflecting the condition of the embedding.

For example, a query vector of the attention mechanism may represent a target region of an input image or a feature of the input image, and a key vector and a value vector may be generated from the input embedding and used to determine (or calculate) how relevant the query vector is to the condition of the embedding.

In an embodiment of the present disclosure, an embedding corresponding to an intent of a user may be pre-trained to correspond to an operation of editing a masked region of an image, based on the intent of the user.

For example, the embedding may be learned (or trained) through a process of converting a text prompt, into which the intent of the user is input, into a vector. In an embodiment of the present disclosure, the embedding may also be referred to as a conditional embedding, a text embedding, or a trained embedding. The embedding according to an embodiment of the present disclosure may be a value pre-trained through textual inversion.

A "foreground creation embedding" may refer to an embedding vector that a generative model uses as a condition to perform the "foreground creation" described above. For example, the foreground creation embedding may be a value trained to correspond to an operation of creating a foreground to edit an image with respect to a target region. Specifically, the foreground creation embedding may be a value trained through a process of filling a foreground region of a masked image based on a shape of a mask and a context of an image by using, as training data, the masked image obtained by masking a foreground region of an image.

A "foreground removal embedding" may refer to an embedding vector that a generative model uses as a condition to perform the "foreground removal" described above. For example, the foreground removal embedding may be a value trained to correspond to an operation of editing an image with respect to a target region by extending a background. An embedding corresponding to foreground removal may be a value trained through a process of filling a background region of a masked image with a background without a foreground by using, as training data, the masked image obtained by masking a background region of an image.

In an embodiment of the present disclosure, a generative model may edit an image by reflecting an intent of a user by using an embedding corresponding to the intent of the user.

A database may refer to a space in which data related to tasks performed using a model is stored. Information regarding a user's previous use of a model may be stored in the database. According to an embodiment of the present disclosure, an embedding matrix corresponding to a prompt and an embedding matrix corresponding to an intent may be stored in the database. For example, an embedding matrix corresponding to a foreground creation operation and an embedding matrix corresponding to a foreground removal operation may be stored in the database.

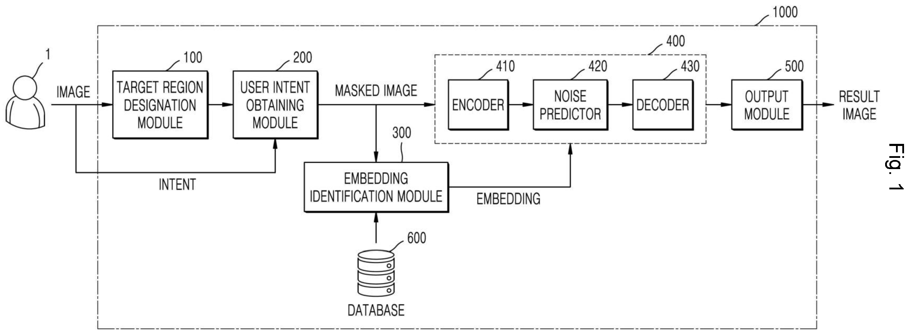

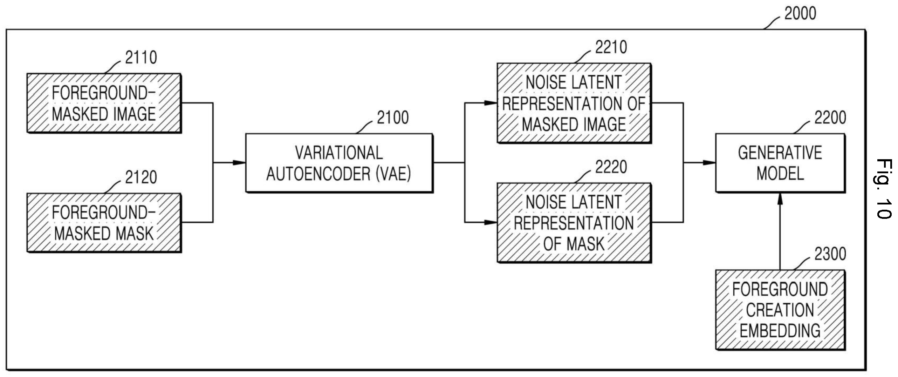

Hereinafter, the present disclosure will be described in detail with reference to accompanying drawings. First, an image editing process according to an embodiment of the present disclosure will be described with reference to FIGS. 1 to 9, and an embedding training process according to an embodiment of the present disclosure will be described with reference to FIGS. 10 to 15.

The present disclosure relates to a method of editing an image by reflecting an intent of a user by using a generative model without an input of a prompt, and embodiments of the present disclosure are characterized in that an amount of computation to be performed by a generative model is reduced and an amount of data transmitted between memories during a processing process is also reduced by using, as a condition for image editing, a pre-trained embedding corresponding to an intent instead of a text encoder. Therefore, when a method according to embodiments of the present disclosure is used, a generative model may be executed even in an electronic device having a relatively low specification, and thus, on-device implementation of the generative model may be possible.

In addition, embodiments of the present disclosure may enhance a user experience by enabling an image to be edited by reflecting an intent of a user (e.g., 'foreground creation' or 'foreground removal') without a complex prompt input or prompt engineering for reflecting the intent of the user, thereby allowing the user to easily edit the image by correctly (or accurately) reflecting the intent of the user by using a generative model.

In addition, an embodiment of the present disclosure may enable an image to be edited by reflecting an intent for each image region (or for each pixel) instead of applying a same intent to one image, thereby simplifying an image editing process by reflecting a plurality of intents through a single inference, without a need to perform a plurality of inference processes for each intent.

FIG. 1 is a diagram for explaining modules included in an electronic device, according to an embodiment of the present disclosure. Referring to FIG. 1, an electronic device 1000 according to an embodiment of the present disclosure may include a target region designation module 100, a user intent obtaining module 200, an embedding identification module 300, a generative model 400, an output module 500, and a database 600.

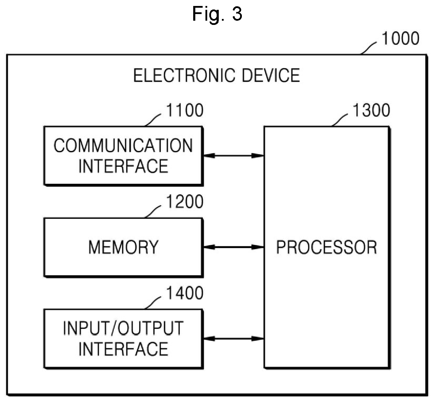

The modules 100, 200, 300, 400, 500, and 600 included in the electronic device 1000 of FIG. 1 are components classified based on functions or roles. The modules 100, 200, 300, 400, 500, and 600 of the electronic device 1000 of FIG. 1 may be software components implemented when a processor 1300 of the electronic device 1000, which will be described below with reference to FIG. 3, executes a program stored in memory 1200, and may also be virtual components that do not have an actually matching hardware device. In other words, operations performed when the processor 1300 of the electronic device 1000 executes a program or instruction stored in the memory 1200 may be classified into a plurality of groups according to functions or purposes, and entities that perform the operations included in each classified group may be represented as the modules 100, 200, 300, 400, 500, and 600 of FIG. 1. Therefore, operations described as being performed by the modules 100, 200, 300, 400, 500, and 600 of the electronic device 1000 illustrated in FIG. 1 may be regarded as being actually performed by the processor 1300 of the electronic device 1000 by executing a program or instruction stored in the memory 1200.

Although FIG. 1 illustrates that one electronic device 1000 includes all of the modules 100, 200, 300, 400, 500, and 600, the present disclosure is not limited thereto, and at least some of the modules 100, 200, 300, 400, 500, and 600 may be implemented to be included in a separate device, or any one module may be implemented to be included in another module. As such, the modules 100, 200, 300, 400, 500, and 600 included in the electronic device 1000 according to an embodiment of the present disclosure may be hardware components or software components, and may be implemented in any form of electronic devices (e.g., one electronic device or a combination of two or more electronic devices).

The electronic device 1000 according to an embodiment of the present disclosure may be a user terminal (e.g., a smartphone, a laptop computer, or a desktop computer), but is not limited thereto, and may be a server that performs communication with the user terminal.

The target region designation module 100 is a component for designating a target region, which is a region to be edited, within an input image obtained from a user 1. The target region may be a region determined within the input image, and may refer to a region to be edited, synthesized, generated, or removed so that an image different from the input image is to be synthesized therein.

In an embodiment of the present disclosure, the electronic device 1000 may obtain the input image. The input image may be input data of a generative model that performs an image editing (or image synthesis, image generation) task.

In an embodiment of the present disclosure, the target region designation module 100 may receive a user input for designating (or selecting), as the target region, a partial region of the input image. The user 1 may designate the target region in any method.

The electronic device 1000 may obtain at least one target region within the input image based on the user input (e.g., a rectangular selection or a free selection such as a lasso selection) for designating (or selecting), as the target region, the partial region of the input image. When the partial region of the input image is designated (or selected) as the target region, a position, a size, or the like of each target region may be determined. For example, bounding box coordinates of the target region (in the case of the rectangular selection) or pixel coordinates representing a boundary of a selected region (in the case of the free selection) may be determined.

In an embodiment of the present disclosure, the target region designation module 100 may obtain a mask in which the target region is masked. The target region designation module 100 may obtain a masked image by combining the input image with the mask in which the target region is masked.

The user intent obtaining module 200 is a component for obtaining an intent of the user 1 for each target region. The electronic device 1000 may receive an intent for each target region (e.g., a foreground creation intent or a foreground removal intent) from the user 1 through the user intent obtaining module 200. The user 1 may determine (or select or designate) how to edit (or fill or synthesize) each target region through the user intent obtaining module 200. In an embodiment of the present disclosure, the user intent obtaining module 200 may receive, from the user 1, whether to perform "foreground creation" or "foreground removal" for each target region.

In an embodiment of the present disclosure, the intent obtained from the user 1 may include the foreground creation intent to create a foreground to fill the target region and the foreground removal intent to extend a background to fill the target region.

The user intent obtaining module 200 may obtain the user input in any manner. In an embodiment of the present disclosure, the user intent obtaining module 200 may be combined with the target region designation module 100 of the electronic device 1000, or may exist independently. In an embodiment of the present disclosure, the user intent obtaining module 200 may be combined with a photograph editing function of the electronic device 1000, or may exist independently.

The user intent obtaining module 200 may provide an "intent selection function" that allows one of intents presented through a display of the electronic device 1000 to be selected for each target region. The user intent obtaining module 200 may obtain a user input for selecting an intent for each target region.

The user intent obtaining module 200 may provide a plurality of user intent options (or items or choices) to the user 1. For example, the user intent obtaining module 200 may allow the user 1 to select one of a plurality of user intents by utilizing a UI element, such as an icon, a button, a drop-down menu, a radio button, a slider, a checkbox, a list box, or a toggle switch, of the electronic device 1000.

The user intent obtaining module 200 may receive a user input for selecting one of the plurality of user intents. At this time, selection may be performed in any manner, such as touching an icon or a button, clicking, selecting a menu, checking a checkbox, selecting a switch, or making a gesture. Because the user intent obtaining module 200 may obtain an intent without a text encoder for processing text, the user intent obtaining module 200 may accurately and efficiently obtain and process the intent.

In an embodiment of the present disclosure, the user intent obtaining module 200 may obtain the intent of the user 1 for each target region. For example, the user intent obtaining module 200 may obtain different intents for each target region, or may obtain the same intent for each target region. For example, the user intent obtaining module 200 may obtain a foreground removal intent for a first target region and a foreground creation intent for a second target region. For example, the user intent obtaining module 200 may obtain a foreground creation intent for the first target region and a foreground creation intent for the second target region.

The obtaining of the target region by the target region designation module 100 and the obtaining of the intent by the user intent obtaining module 200 may be performed sequentially or may be performed alternately. For example, after the target region designation module 100 obtains a plurality of target regions, the user intent obtaining module 200 may obtain an intent of a user for each target region. For example, each time the target region designation module 100 obtains one target region, the user intent obtaining module 200 may obtain the intent of the user for the obtained target region.

The user intent obtaining module 200 may set a mask matrix in the masked image, based on the obtained intent of the user. The mask matrix may be set in a pixel space or may be set in a latent space. The mask matrix may be a ternary mask matrix. For example, the electronic device 1000 may obtain a mask matrix in which a value of "1" is set for a target region for which a foreground creation intent is obtained, a value of "-1" is set for a target region for which a foreground removal intent is obtained, and a value of "0" is set for a region other than the target region. Through the above process, the electronic device 1000 may obtain intents for the target regions.

The embedding identification module 300 is a component for identifying an embedding corresponding to the intent obtained through the user intent obtaining module 200.

The embedding may be a pre-trained value. For example, the embedding may be a value pre-trained through textual inversion. For example, the embedding may be a value pre-trained to correspond to an operation of editing a masked region of an image based on an intent of a user. According to an embodiment of the present disclosure, the embedding may be a value obtained by converting (or learning or training) a "foreground creation" or "foreground removal" condition through textual inversion. The embedding may be a value stored in the database 600.

In an embodiment of the present disclosure, the embedding identification module 300 may identify the embedding corresponding to the intent obtained through the user intent obtaining module 200.

When the user intent obtaining module 200 obtains the foreground creation intent, the embedding identification module 300 may identify a foreground creation embedding from the database 600. When the user intent obtaining module 200 obtains the foreground removal intent, the embedding identification module 300 may identify a foreground removal embedding from the database 600.

In an embodiment of the present disclosure, the embedding identification module 300 may identify the embedding individually for each target region of the image. For example, a foreground creation embedding may be identified for the first target region, and a foreground removal embedding may be identified for the second target region. Alternatively, a foreground creation embedding may be identified for the first target region, and a foreground removal embedding may also be identified for the second target region.

Based on the embedding identified by the embedding identification module 300, the generative model 400 may apply foreground creation or foreground removal for each region of the image, thereby generating an image editing result by reflecting intents of a plurality of users to the input image. For example, when the generative model 400 uses the foreground creation embedding as a condition, the generative model 400 may perform an operation of performing "foreground creation" on the target region of the image. For example, when the generative model 400 uses the foreground removal embedding as a condition, the generative model 400 may perform an operation of performing "foreground removal" on the target region of the image.

The generative model 400 may be a generative Al model for editing an image input by the user 1, based on the intent input by the user 1. According to an embodiment of the present disclosure, the generative model 400 may include an encoder 410, a noise predictor 420, and a decoder 430. The encoder 410 and the decoder 430 of the generative model 400 may each include a plurality of attention layers and feedforward layers. The generative model 400 is characterized by editing the image by using the embedding corresponding to the intent of the user as a direct optimization variable.

In an embodiment of the present disclosure, the generative model 400 may be an image-to-image type artificial intelligence model that receives an image and outputs a generated image. In an embodiment of the present disclosure, the generative model 400 may be a classifier-free guidance type artificial intelligence model that performs noise prediction without a separate classifier. In an embodiment of the present disclosure, the generative model 400 may be implemented in the form of a diffusion model.

The generative model 400 may obtain, from the embedding identification module 300, the embedding corresponding to the intent of the user to edit the image based on the intent input by the user 1. The generative model 400 may use the obtained embedding in a noise prediction process of the noise predictor 420.

In an embodiment of the present disclosure, the generative model 400 may be an artificial intelligence model that includes (or sets, stores, or designates) a guidance scale that adjusts a degree of reflection of conditional prediction and unconditional prediction in a matrix form. By using the guidance scale in a matrix form, the generative model 400 may perform the conditional prediction by using the embedding corresponding to the intent of the user for each target region. The generative model 400 may edit the image by reflecting a plurality of user intents for one image with a single inference.

According to an embodiment of the present disclosure, the generative model 400 may be an on-device model mounted on the electronic device 1000, which is a terminal of the user 1. For example, the generative model 400 may be executed when the processor 1300 of the electronic device 1000 executes a program stored in the memory 1200, which will be described below.

In an embodiment of the present disclosure, the output module 500 is a component that generates an output to be provided to the user 1 according to an output of the generative model 400. The output module 500 may appropriately transform and output the output of the generative model 400 according to an input/output interface (not shown) of the electronic device 1000.

In an embodiment, the electronic device 1000 may display, on a screen, a result image generated using the generative model, through the display included in the electronic device 1000. In an embodiment, the electronic device 1000 may transmit the result image to another electronic device. For example, the electronic device 1000 may transmit the result image to another electronic device including a display, such that the result image is displayed on the other electronic device.

In an embodiment of the present disclosure, the database 600 may refer to a space in which a pre-trained embedding is stored. In the database 600, an embedding corresponding to an intent of a user may be pre-trained and stored. The pre-trained embedding may be an embedding trained by the electronic device 1000, or may be an embedding trained by a server and transmitted to the electronic device 1000.

According to an embodiment of the present disclosure, the database 600 may be stored in flash memory, and the electronic device 1000 may store, in cache memory, some of embeddings stored in the database 600 while performing a task, so as to quickly utilize the embeddings for an operation.

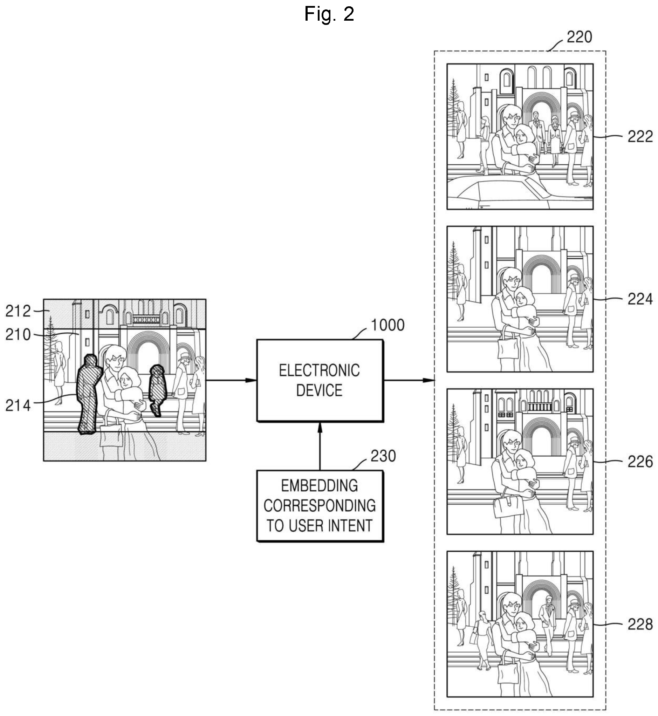

FIG. 2 is a diagram illustrating an example of a method by which a generative model edits an image, according to an embodiment of the present disclosure.

In an embodiment, the electronic device 1000 may provide a user with a service for synthesizing an image by using a generative model. The electronic device 1000 may edit an input image 210 by using the generative model 400 and output the same. The electronic device 1000 may receive, from the user, a user input for designating partial regions of the input image 210 as target regions 212 and 214. The electronic device 1000 may receive, from the user, an intent for each of the target regions 212 and 214 of the input image. The electronic device 1000 may edit an image by using the generative model, based on an embedding 230 corresponding to the intent of the user, and output a result image 220.

In an embodiment, the result image 220 output by the electronic device 1000 may be generated by reflecting the intent of the user to perform foreground creation or foreground removal on the input image for each target region of the input image. In an embodiment of the present disclosure, the electronic device 1000 may perform foreground creation or foreground removal on each of a first target region 212 and a second target region 214 to output the result image 220.

For example, when the intent for the first target region 212 and the second target region 214 is foreground creation, the generative model 400 may edit images of the first target region 212 and the second target region 214, based on a foreground creation embedding to output a first result image 222. For example, when the intent for the first target region 212 and the second target region 214 is foreground removal, the generative model 400 may edit the images of the first target region 212 and the second target region 214, based on a foreground removal embedding to output a second result image 224.

For example, when the intent for the first target region 212 is foreground creation and the intent for the second target region 214 is foreground removal, the generative model 400 may edit the first target region 212 based on the foreground creation embedding and edit the image of the second target region 214 based on the foreground removal embedding to output a third result image 226. For example, when the intent for the first target region 212 is foreground removal and the intent for the second target region 214 is foreground creation, the generative model 400 may edit the first target region 212 based on the foreground removal embedding and edit the image of the second target region 214 based on the foreground creation embedding to output a fourth result image 228.

To this end, the electronic device 1000 may use the generative model of the present disclosure, which is specialized for a task of applying an intent of a user to an input image for each target region and editing an image reflecting a plurality of user intents through a single rendering.

FIG. 3 is a block diagram illustrating a configuration of an electronic device, according to an embodiment of the present disclosure.

In an embodiment, the electronic device 1000 may include a communication interface 1100, the memory 1200, the processor 1300, and an input/output interface 1400.

In an embodiment, the electronic device 1000 may be any type of device capable of editing an image. For example, the electronic device 1000 may be implemented as any type and form of electronic device including a display. The electronic device 1000 may include, but not limited to, devices capable of displaying an image through a display, such as a smart TV, a smartphone, a tablet PC, a laptop PC, a glasses-type display, and a head-mounted display. As another example, the electronic device 1000 may be implemented as any type and form of electronic device that is connectable to a display in a wired or wireless manner. For example, the electronic device 1000 may include, but not limited to, devices capable of displaying an image through a display by being connected to the display in a wired or wireless manner, such as a set-top box, a desktop PC, and a server.

The communication interface 1100 may perform data communication with other electronic devices according to control by the processor 1300. The communication interface 1100 may include a communication circuit.

The communication interface 1100 may perform data communication between the electronic device 1000 and another electronic device (e.g., a server 5000) by using at least one of data communication methods including, for example, wired local area network (LAN) (e.g., Ethernet), wireless LAN (e.g., Wi-Fi), a cellular network (e.g., 4G or 5G), Bluetooth, Bluetooth Low Energy (BLE), ZigBee, infrared Data Association (IrDA), near field communication (NFC), radio frequency (RF) communication, and various other types of known wireless/wired communication technologies.

The electronic device 1000 may transmit and receive data for editing an image to and from another electronic device (e.g., a second electronic device 2000 or the server 5000) by using the communication interface 1100. For example, the electronic device 1000 may transmit and receive source images, embeddings corresponding to an intent of a user, and/or a result image to and from another electronic device, and may receive a generative model for image editing from another electronic device.

The memory 1200 may include any type of memory. The memory 1200 may include flash memory type memory, hard disk type memory, multimedia card micro type memory, or card type memory (for example, secure digital (SD) or extreme digital (XD) memory), and may include non-volatile memory including at least one of read-only memory (ROM), electrically erasable programmable read-only memory (EEPROM), programmable read-only memory (PROM), magnetic memory, magnetic disk, or optical disk, and volatile memory, such as random access memory (RAM) or static random access memory (SRAM).

The memory 1200 may store instruction(s) and/or program(s) that cause the electronic device 1000 to edit and output an image. For example, the memory 1200 may store instructions and programs for implementing functions of the target region designation module 100, the user intent obtaining module 200, the embedding identification module 300, the generative model 400, and the output module 500. Meanwhile, the modules stored in the memory 1200 are for convenience of description and are not necessarily limited thereto. Another module may be added to implement the above-described embodiments, or some modules may be omitted. In addition, one module may be divided into a plurality of modules distinguished according to detailed functions, and some of the above-described modules may be combined to be implemented as one module.

The processor 1300 may control overall operations of the electronic device 1000. The processor 1300 may include processing circuitry. For example, the processor 1300 may execute one or more instructions of a program stored in the memory 1200 to control overall operations for the electronic device 1000 to provide a composite image. There may be one or more processors 1300.

The processor 1300 may be configured of at least one of, for example, a central processing unit (CPU), a micro-processor, a graphics processing unit (GPU), an application specific integrated circuit (ASIC), a digital signal processor (DSP), a digital signal processing device (DSPD), a programmable logic device (PLD), a field programmable gate array (FPGA), an application processor (AP), a neural processing unit, or an artificial intelligence-dedicated processor designed in a hardware structure specialized for processing of an artificial intelligence model, but is not limited thereto.

The processor 1300 may edit an image by using a generative model. The generative model may include a diffusion model. The diffusion model may be a data file including model structure information defining an architecture of an encoder, a decoder, a noise predictor, a CLIP, an adapter, or the like, and weights and parameters. Because operations in which the processor 1300 edits an image by using the generative model have already been described in the description about the previous drawings, redundant description thereof will be omitted.

When there are one or more processors 1300, operations of the present disclosure may be performed by at least one processor individually or collectively executing the instructions and/or the program stored in the memory 1200. When a method according to an embodiment of the present disclosure includes a plurality of operations, the plurality of operations may be performed by one processor 1300 or by the plurality of processors 1300.

For example, when a first operation, a second operation, and a third operation are performed by a method according to an embodiment, the first operation, the second operation, and the third operation may all be performed by a first processor, or some of the first to third operations may be performed by the first processor (e.g., a general-purpose processor) and the remaining operations may be performed by a second processor (e.g., an artificial intelligence-dedicated processor). Here, operations for training/inference of an artificial intelligence model may be performed by the artificial intelligence-dedicated processor, which is an example of the second processor. However, embodiments of the present disclosure are not limited thereto.

At least one processor according to the present disclosure may be implemented as a single-core processor or a multi-core processor. When a method according to an embodiment of the present disclosure includes a plurality of operations, the plurality of operations may be performed by one core or by a plurality of cores included in at least one processor.

The input/output interface 1400 may output an image signal to a screen of the electronic device 1000 according to control by the processor 1300. For example, the input/output interface 1400 may output, to the screen, an image signal that is processed while the electronic device 1000 edits an image, such as an image list for selecting input images, an image search result, a selected image, and an image editing result. The input/output interface 1400 may include a touch panel. The touch panel may include one or more touch sensors that sense a touch input. In an embodiment, a user input may be input through the touch panel.

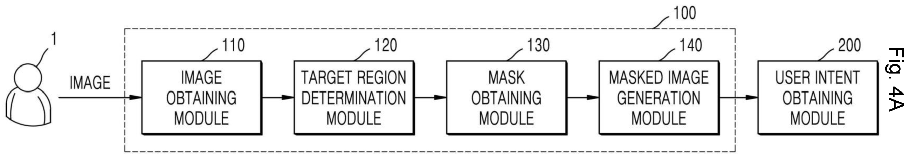

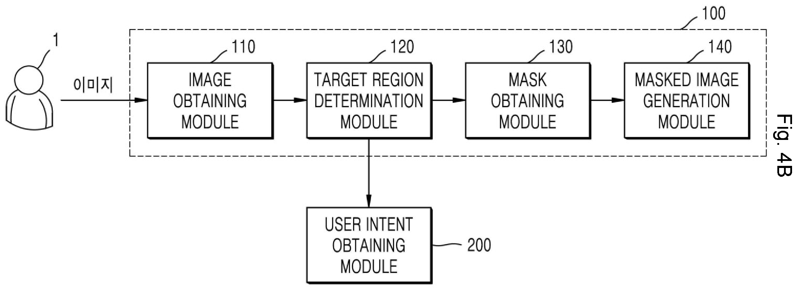

FIGS. 4A and 4B are diagrams for explaining detailed modules included in the target region designation module of FIG. 1. First, the detailed modules included in the target region designation module will be described with reference to FIG. 4A, and FIG. 4B will be described focusing on differences from FIG. 4A.

An image obtaining module 110 may obtain an input image for image editing. The image obtaining module 110 may obtain the input image from the user 1 as illustrated in FIG. 4A, or may obtain the input image from the electronic device 1000.

For example, the image obtaining module 110 may provide an image import function for selecting one of images stored in a media storage of the electronic device 1000. The image obtaining module 110 may obtain a user input for selecting the input image from among one or more images stored in the electronic device 1000. The images stored in the electronic device 1000 may include an image captured using a camera of the electronic device 1000 and an image received from an external source (for example, an image downloaded from a public domain or an image received from another electronic device).

In an embodiment of the present disclosure, the image obtaining module 110 may obtain, as the input image, an image captured in real time by using the camera and displayed on the screen of the electronic device 1000. The electronic device 1000 may capture the input image that is captured and displayed in real time on the screen, based on identifying a request to execute an image editing function.

A target region determination module 120 may determine, as a target region, a partial region of the input image obtained by the image obtaining module 110.

In an embodiment of the present disclosure, the target region determination module 120 may receive a user input for designating (or selecting), as the target region, the partial region of the input image. The target region determination module 120 may receive the user input for designating (or selecting), as the target region, the partial region of the input image in any manner (for example, a rectangular selection or a free selection such as a lasso selection).

For example, the target region determination module 120 may receive a user input for designating, as the target region, the partial region of the input image in a drag-and-drop manner. The target region determination module 120 may receive a user input in which a user touches the input image displayed on the display and drags the partial region to designate the partial region as the target region.

For example, the target region determination module 120 may receive a user input for designating, as the target region, the partial region of the input image in a click-and-drag manner. The target region determination module 120 may receive a user input in which a user clicks the input image displayed on the display and drags the partial region to select a rectangular region, a free region, or the like, thereby designating the partial region as the target region.

For example, the target region determination module 120 may receive a user input for designating, as the target region, the partial region of the input image via a stylus pen or a digital pen.

The above-described embodiments are embodiments in which the partial region of the input image is designated as the target region, but the present disclosure is not limited thereto.

In an embodiment of the present disclosure, the target region determination module 120 may automatically identify an object related to a region designated by the user 1, based on the user input for designating (or selecting), as the target region, the partial region of the input image, thereby determining the target region. For example, the target region may be determined by an object detection function, in addition to the user input. In an embodiment, when the user 1 selects the partial region of the input image by touch, click, drag, or the like, the target region determination module 120 may identify (or detect) an entire object related to the partial region and determine the entire object as the target region.

In an embodiment of the present disclosure, the target region determination module 120 may use a computer vision algorithm, a deep learning-based object detection model, or boundary detection.

For example, the target region determination module 120 may analyze visual features, such as a color, a boundary, or a texture, of a region selected by the user 1. The target region determination module 120 may extend or reduce the region selected by the user 1 based on the visual features of the region selected by the user 1, thereby identifying (or detecting) the entire object related to the region selected by the user 1. The target region determination module 120 may detect (or determine or perceive) a boundary of the object identified in the input image. The target region determination module 120 may use a deep learning segmentation technique. The target region determination module 120 may determine the target region based on the determined boundary of the object.

In an embodiment of the present disclosure, when the target region is determined by the object detection function in addition to the user input, the target region determination module 120 may receive confirmation from the user 1 as to whether the target region determined by the object detection function conforms to the intent of the user.

For example, the target region determination module 120 may, based on a user input for designating (or selecting), as the target region, a region including a foreground, detect the entire foreground based on visual features of the region selected by the user 1, thereby determining a boundary of the foreground. The target region determination module 120 may determine the target region based on the determined boundary of the foreground.

A mask obtaining module 130 may obtain a mask for the target region determined through the target region determination module 120. For example, the mask obtaining module 130 may obtain the mask in which the determined target region is masked with 1 (white) and a region other than the target region is masked with 0 (black), but is not limited thereto.

A masked image generation module 140 may combine the input image with the mask for the target region determined through the mask obtaining module 130, thereby obtaining a masked image. For example, the masked image generation module 140 may obtain the masked image through pixel-wise multiplication, channel combination, multilayer combination, or the like with respect to the input image and the mask for the target region, but is not limited thereto.

According to an embodiment of the present disclosure, as illustrated in FIG. 4A, after an operation of the target region designation module 100 is completed, an operation of the user intent obtaining module 200 may be performed. For example, after both the target region designation and the masked image generation for the target region by the target region designation module 100 are completed, the user intent obtaining module 200 may obtain the intent of the user for each target region.

According to an embodiment of the present disclosure, as illustrated in FIG. 4B, the operation of the user intent obtaining module 200 may be performed simultaneously with the operation of the target region designation module 100. For example, after the target region designation module 100 determines the target region, the user intent obtaining module 200 may obtain the intent of the user for the determined target region, and thereafter, masked image generation for the target region may be performed.

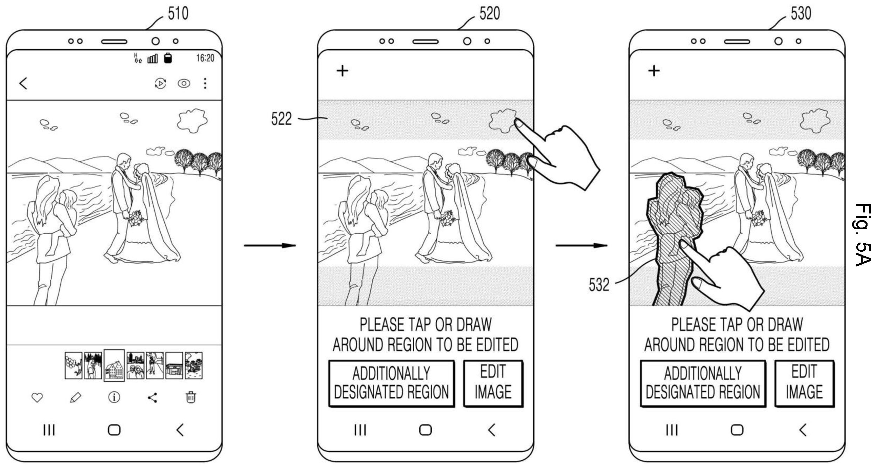

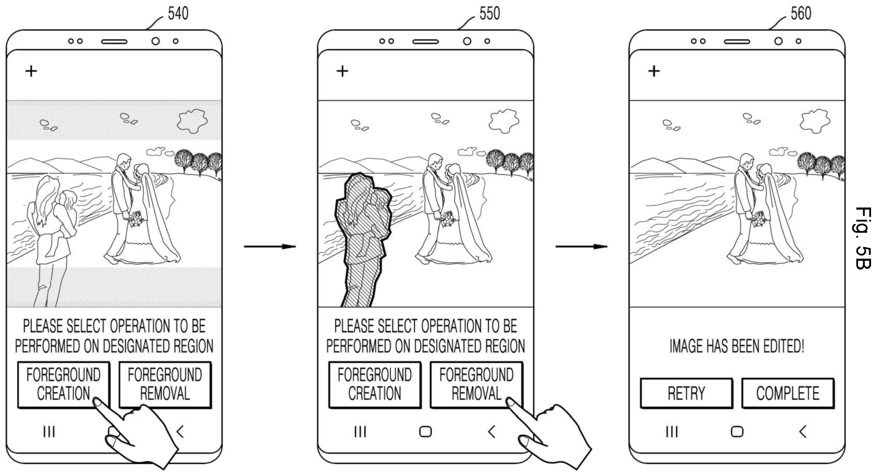

FIGS. 5A and 5B are diagrams for explaining a method of obtaining a target region and an intent of a user, according to an embodiment of the present disclosure, by using the components illustrated in FIG. 4A. FIGS. 5A and 5B illustrate an embodiment in which the operation of the target region designation module 100 and the operation of the user intent obtaining module 200 described with reference to FIG. 4A are sequentially performed.

In operation S510, the electronic device 1000 may obtain an input image. The input image may be an image to be edited. The image obtaining module 110 of the target region designation module 100 may perform operation 510.

In operation 520, the electronic device 1000 may designate a partial region of the input image as a first target region 522. In operation 530, the electronic device 1000 may designate a partial region of the input image as a second target region 532. The target region determination module 120 of the target region designation module 100 may perform operation 520 and operation 530. After performing operation 530, the electronic device 1000 may obtain masks and masked images for the first target region 522 and the second target region 532.

In operation 540, the electronic device 1000 may obtain an intent of a user (for example, foreground creation or foreground removal) for the first target region 522. In operation 550, the electronic device 1000 may obtain an intent of a user (for example, foreground creation or foreground removal) for the second target region 532. The user intent obtaining module 200 may perform operation 540 and operation 550.

In operation 560, the electronic device 1000 may identify, from a database, an embedding corresponding to the obtained intent of the user, edit the input image through a generative model based on the embedding, and output a result image. Operation 560 may be performed by the embedding identification module 300, the generative model 400, and the output module 500, and detailed descriptions thereof are omitted herein.

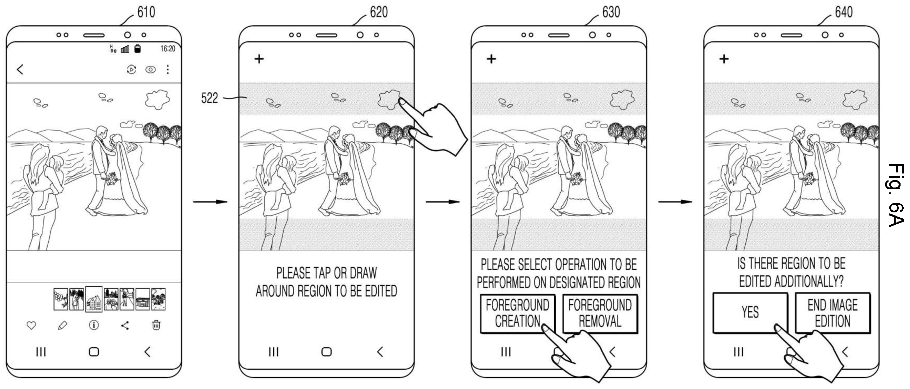

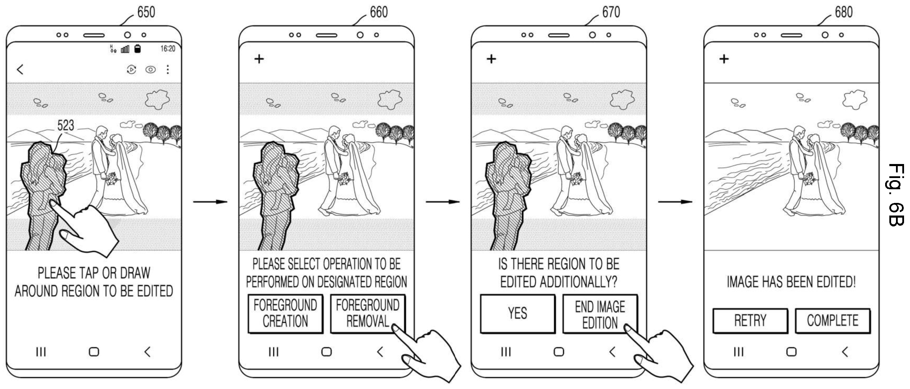

FIGS. 6A and 6B are diagrams for explaining a method of obtaining a target region and an intent of a user, according to an embodiment of the present disclosure, by using the components illustrated in FIG. 4B. FIGS. 6A and 6B illustrate an embodiment in which the operation of the target region designation module 100 and the operation of the user intent obtaining module 200 described with reference to FIG. 4B are performed alternately (or simultaneously).

In operation S610, the electronic device 1000 may obtain an input image. The input image may be an image to be edited. The image obtaining module 110 of the target region designation module 100 may perform operation 610.

In operation 620, the electronic device 1000 may designate a partial region of the input image as the first target region 522. In operation 630, the electronic device 1000 may obtain an intent of a user (for example, foreground creation or foreground removal) for the first target region 522.

In operation 640, the electronic device 1000 may receive, from the user 1, a response regarding whether to designate the second target region 532.

In operation 650, the electronic device 1000 may designate a partial region of the input image as a second target region. Operation 650 may be performed when the electronic device 1000 receives, from the user 1, a response indicating that the second target region 532 is to be designated in operation 640. In operation 660, the electronic device 1000 may obtain an intent of the user (for example, foreground creation or foreground removal) for the second target region.

In operation 670, the electronic device 1000 may receive, from the user 1, a response regarding whether to designate a third target region.

In operation 680, the electronic device 1000 may identify, from a database, an embedding corresponding to the obtained intent of the user, edit the input image through a generative model based on the embedding, and output a result image. Operation 680 may be performed by the embedding identification module 300, the generative model 400, and the output module 500, and detailed descriptions thereof are omitted herein for the sake of brevity. Operation 680 may be performed when the electronic device 1000 receives, from the user 1, a response indicating that the third target region is not to be designated in operation 640.

The target region determination module 120 of the target region designation module 100 may perform operation 620 and operation 650. After performing operation 620, the electronic device 1000 may obtain a mask and a masked image for the first target region 522. After performing operation 650, the electronic device 1000 may obtain a mask and a masked image for the second target region 532. The user intent obtaining module 200 may perform operation 630 and operation 660.

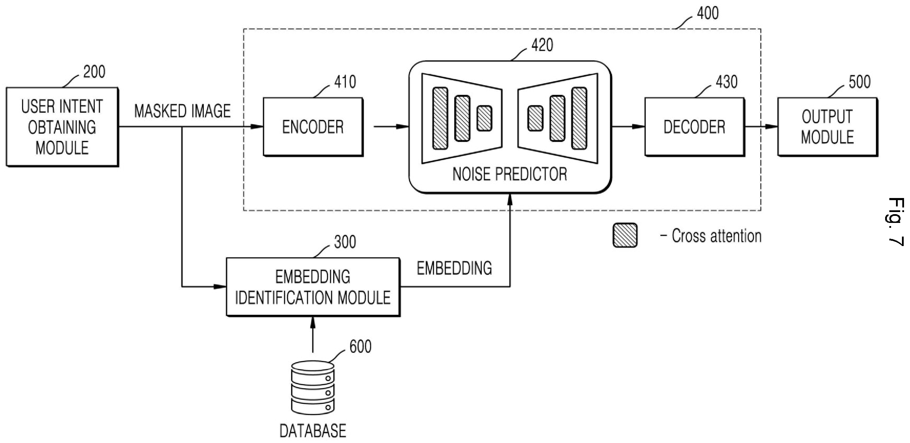

FIG. 7 is a diagram for explaining a method by which an electronic device edits an image by using a generative model, according to an embodiment of the present disclosure.

In an embodiment, the electronic device 1000 may edit an image by using the generative model 400. The generative model 400 may be an artificial intelligence model trained to edit an image based on an embedding as a condition. The generative model 400 may be a model that is prepared to edit an image described in the present disclosure through performance verification after pre-training and/or fine-tuning training is performed. The generative model 400 may use classifier-free guidance (CFG) to edit an image with reference to an input image and an intent of a user. The generative model 400 may edit an image based on an embedding corresponding to the intent of the user.

The embedding may have been pre-trained and stored in a database. A training process of the embedding will be described in detail with reference to FIGS. 10 to 15.

In an embodiment of the present disclosure, in an embodiment, the generative model 400 may include, but is not limited to, the encoder 410, the noise predictor 420, and the decoder 430.

The encoder 410 and the decoder 430 may be implemented using a neural network architecture for compressing and reconstructing data, or through a modification of the neural network architecture. The encoder 410 and the decoder 430 may be implemented based on a variational autoencoder (VAE) architecture, but are not limited thereto.

The noise predictor 420 may be implemented using a neural network architecture for reconstructing an image by predicting and removing noise, or through a modification of the neural network architecture. For example, the noise predictor 420 may be implemented based on a U-Net architecture, but is not limited thereto. The noise predictor 420 may include an attention module that uses an attention mechanism for merging, into noise images to which noise has been added in a stepwise manner, an embedding and a feature vector converted from an input image. For example, the noise predictor may include one or more cross-attention modules.

According to an embodiment of the present disclosure, a masked image in which a target region is masked may be converted into a feature vector by the encoder 410. The embedding identified by the embedding identification module 300 may be used as a condition for the noise predictor 420. The noise predictor 420 may combine the feature vector of the input image and the embedding, and repeat gradual noise prediction and removal therefor to generate a final feature vector. By using the embedding corresponding to the intent of the user as a condition for the noise predictor 420, the noise predictor 420 may remove noise by reflecting the intent of the user. The final feature vector may be converted into a result image by the decoder 430.

Hereinafter, a process of editing an image by using the generative model 400 will be described.

An inference process of the generative model 400 is a process of editing an image of a target region by using an input image 310 and a noise image to generate a result image. The generative model 400 may generate initial noise and edit an image by repeating predicting noise at each time step starting from sampled initial noise and removing the predicted noise.

In an embodiment of the present disclosure, in a noise prediction process of the noise predictor 420, included in the inference process of the generative model 400, a CFG using a combination of conditional prediction and unconditional prediction may be used. The conditional prediction is predicting noise under a condition (for example, foreground creation or foreground removal for a target region), and unconditional prediction is predicting noise without a condition. This may be expressed as Equation (1) below. ${{ϵ}^{˜}}_{θ} \left(x, y\right) = \left(1+ω\right) {ϵ}_{θ} \left(x, y\right) - ω {ϵ}_{θ} \left(x\right)$ (1)

In Equation (1) above, *ε̃_{θ}*(*x*, *y*) denotes resulting predicted noise,*ε_{θ}*(*x*, *y*) denotes noise predicted in a state where an embedding y representing a condition is given, ε*_{θ}*(*x*) denotes noise predicted in a state where there is no condition, and w is a guidance scale representing a degree of condition reflection.

In an embodiment of the present disclosure, the generative model 400 may perform the unconditional prediction on the image of the target region. In the unconditional prediction, in a state where there is no condition, the generative model 400 may update a feature map for the image of the target region by utilizing an attention mechanism, based only on general features of the image.

In an embodiment of the present disclosure, the generative model 400 may perform the conditional prediction by using the embedding (for example, a foreground creation embedding or a foreground removal embedding) as the condition. In the conditional prediction, the image of the target region may be edited by reflecting the condition of the embedding by using a condition embedding in the attention mechanism of the generative model 400.

For example, the generative model 400 may extract a query vector from the feature map of the image of the target region, and may use the embedding as a key vector and a value vector. The embedding includes information about the condition (or an intent), and thus may be used to determine how relevant the query vector is to the condition. The generative model 400 may calculate an attention score representing a relevance between the image feature map and the embedding through an operation between the query vector and the key vector, and may update the feature map of the target region based on the attention score.

In an embodiment of the present disclosure, in the noise prediction process of the noise predictor 420, a guidance scale in a matrix form may be used. By using the guidance scale in the matrix form in the noise prediction process, the image may be edited by reflecting the intent of the user spatially for each region. By using the guidance scale in the matrix form in the noise prediction process, the image may be edited by reflecting the intent of the user spatially through a single inference. This may be expressed as Equation (2). ${{ϵ}^{˜}}_{θ} \left(x, y, t\right) = {ϵ}_{θ} \left({x}_{t}, t\right) + γ \left({ϵ}_{θ}\left({x}_{t}, y, t\right)-{ϵ}_{θ}\left({x}_{t}, t\right)\right)$ (2)

In Equation (2), *ε̃_{θ}*(*xₜ, y, t*) denotes combined predicted noise, *ε_{θ}*(*xₜ, y, t*) denotes noise predicted in a state where an embedding y representing a condition is given, *ε_{θ}*(*xₜ*, *t*) denotes noise predicted in a state where there is no condition, and *γ* denotes a guidance scale in a matrix form representing a degree of condition reflection. In an embodiment of the present disclosure, ε may have the same dimension as a latent space representation of an input image.

In an embodiment of the present disclosure, the guidance scale γ in the matrix form may be defined as a product of a scalar weight w and a ternary mask matrix M. That is, *γ=wM* may be defined. The ternary mask matrix M may be defined by Equation (3). ${\left(M\right)}_{ij} = \left\{\begin{matrix}+ 1 , & Target Region in which Intent is Foreground Creation \\ - 1 , & Target Region in which Intent is Foreground Removal \\ 0 , & Other Regions\end{matrix}\right.$ (3)

In Equation (3), i,j may denote a pixel value of an input image. When the generative model 400 is a latent diffusion model, i and j may be values defined with respect to the size of a latent space. Equation (4) may be obtained by applying Equation (3) to Equation (2). ${{ϵ}^{˜}}_{θ} \left(x, y\right) = w {ϵ}_{θ} \left(x, {y}_{c}\right) + \left(I-wM\right) {ϵ}_{θ} \left(x, {y}_{r}\right)$ (4)

According to an embodiment of the present disclosure, by using the ternary mask matrix M, the generative model 400 may use both a foreground creation embedding *y_{c}* and a foreground removal embedding *yᵣ* for the conditional prediction when editing one image.

For example, the generative model 400 may identify, from stored embeddings, a foreground creation embedding for the target region having a foreground creation intent. The generative model 400 may use the foreground creation embedding for the conditional prediction with respect to the target region having the foreground creation intent.

For example, the generative model 400 may identify, from the stored embeddings, a foreground removal embedding for the target region having a foreground removal intent. The generative model 400 may use the foreground removal embedding for the conditional prediction with respect to the target region having the foreground removal intent.

Hereinafter, an operation process of the generative model 400 will be described with reference to Equation (3) and Equation (4).

Referring to Equation (3), the generative model 400 determines, for a first target region of the input image having the foreground creation intent, a value of the ternary mask matrix M for a pixel (or, a latent space representation) of the first target region to be 1. When a foreground removal intent is input for a second target region, the generative model 400 determines a value of the ternary mask matrix M for a pixel (or, a latent space representation) of the second target region to be -1.

Referring to Equation (4), for the pixel (or the latent space representation) of the first target region for which the value of the ternary mask matrix M is determined to be 1, the generative model 400 determines ε_{θ}(*x*,*y*_{c}) as a conditional prediction value and ε_{θ}(*x*,*y*_{*r*)} as an unconditional prediction value.

When editing an image of the first target region, the generative model 400 may use the foreground creation embedding *y_{c}* for the conditional prediction. When editing the image of the first target region, the generative model 400 uses the foreground removal embedding *yᵣ* for the unconditional prediction that predicts noise without a condition, and thus, the unconditional prediction is performed without substantially using the foreground removal embedding. According to an embodiment of the present disclosure, the generative model 400 may edit the image of the first target region according to a combination of the unconditional prediction and the conditional prediction with the foreground creation embedding *y_{c}* as a condition.

Referring to Equation (4), for the pixel (or the latent space representation) of the second target region for which the value of the ternary mask matrix M is determined to be -1, the generative model 400 determines ε_{θ}(*x,yᵣ*) as a conditional prediction value and ε_{θ}(*x,y_{c}*) as an unconditional prediction value.

When editing an image of the second target region, the generative model 400 uses the foreground removal embedding *yᵣ* for the conditional prediction. When editing the image of the second target region, the generative model 400 uses the foreground creation embedding *y_{c}* for the unconditional prediction that predicts noise without a condition, and thus, the unconditional prediction is performed without substantially using the foreground creation embedding. According to an embodiment of the present disclosure, the generative model 400 may edit the image of the second target region according to a combination of the unconditional prediction and the conditional prediction with the foreground removal embedding *yᵣ* as a condition.

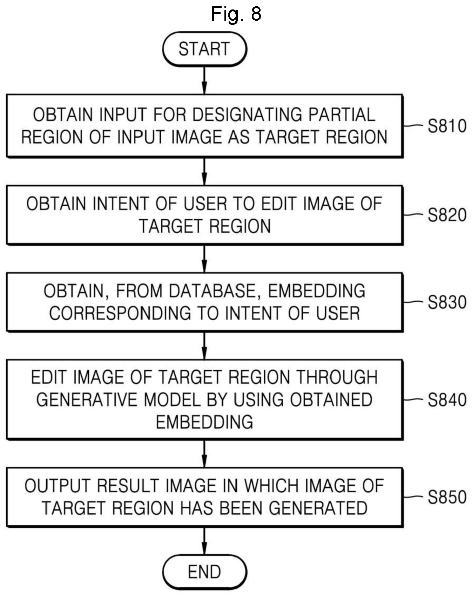

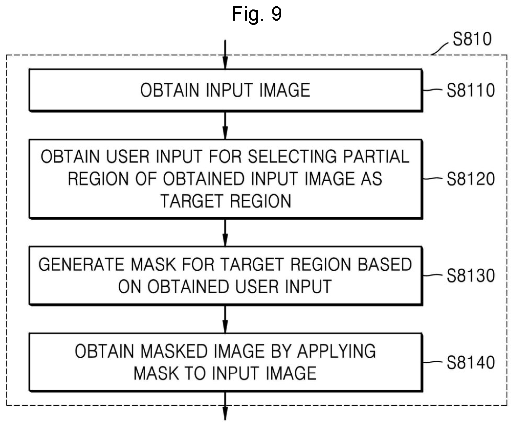

Hereinafter, a method by which an electronic device edits an image by using a generative model, according to embodiments of the present disclosure, will be described with reference to flowcharts of FIGS. 8 and 9. Operations included in the flowcharts of FIGS. 8 and 9 are performed by the electronic device 1000 of FIGS. 1 to 3, and thus, details described above with reference to FIGS. 1 to 7 may be equally applied to FIGS. 8 and 9, even if omitted below.

FIG. 8 is a flowchart for explaining a method by which an electronic device edits an image by using a generative model, according to an embodiment of the present disclosure.

Referring to FIG. 8, in operation S810, the electronic device 1000 may obtain an input for designating, as a target region, a partial region of an input image.

FIG. 9 is a flowchart for explaining detailed operations included in operation S810 of FIG. 8.

In operation S8110, the electronic device 1000 may obtain the input image. The electronic device 1000 may obtain (or select or designate) the input image from among images stored in the memory 1200 of the electronic device 1000. The electronic device 1000 may obtain (or receive) the input image from another electronic device or the server 2000 through the communication interface 1100. The electronic device 1000 may obtain the input image by capturing an image through the camera or the like.

In operation S8120, the electronic device 1000 may receive a user input for selecting, as the target region, the partial region of the obtained input image. For example, the electronic device 1000 may obtain at least one target region within the input image, based on the user input such as a rectangular selection or a free selection such as a lasso selection.

In operation S8130, the electronic device 1000 may generate a mask for the target region based on the obtained user input. The mask may be represented as a binary image. The mask may have the same size as an original image. For example, the electronic device 1000 may generate the mask in which the target region is displayed in white and a portion other than the target region is set in black, but the mask is not limited thereto.

In operation S8140, the electronic device 1000 may apply the mask to the input image to obtain a masked image. For example, in a portion where the mask is 1, a pixel value of the original image may be maintained. In a portion where the mask is 0, a pixel value may be set to a specific value (e.g.: 0 or an average value).

Through operations S8110 to S8140, the electronic device 1000 may designate the target region, which is a region to be edited of the input image. However, operations S8110 to S8140 are an embodiment of operation S810, and operation S710 may be performed by excluding at least one of the operations S7110 to S7140, or by adding another operation between operations S8110 and S8140.

A specific method by which the electronic device 1000 designates the target region has been described above with reference to FIG. 1, FIG. 4A, and FIG. 4B.

Referring back to FIG. 8, in operation S820, the electronic device 1000 may obtain an intent of a user to edit an image of the target region.

The electronic device 1000 may obtain the intent of the user through a button, an icon, a menu, or the like of a UI. The electronic device 1000 may obtain the intent of the user and perform an operation without a separate text encoder. The electronic device 1000 may individually obtain the intent of the user for each target region. In an embodiment of the present disclosure, the electronic device 1000 may obtain a "foreground creation" or "foreground removal" intent for each target region.

A specific method by which the electronic device 1000 obtains the intent of the user has been described above with reference to FIG. 1.

In operation S830, the electronic device 1000 may obtain, from a database, an embedding corresponding to the intent of the user. A specific method by which the electronic device 1000 obtains, from the database, the embedding corresponding to the intent of the user has been described above with reference to FIG. 1.

In operation S840, the electronic device 1000 may edit the image of the target region through a generative model by using the obtained embedding.

In an embodiment of the present disclosure, the electronic device 1000 may edit an image for each target region of the image by using the obtained embedding. The generative model may edit (e.g., synthesize or generate) an image by performing image inpainting.

In an embodiment of the present disclosure, the generative model may be an image-to-image type artificial intelligence model that receives an image and outputs a generated image. The generative model in the present disclosure may be implemented based on a diffusion model, but is not limited thereto.

The generative model may be trained through a forward diffusion process that gradually adds noise and a backward diffusion process that predicts and removes noise, and the trained diffusion model may generate initial noise and generate a new image by predicting and removing noise from the initial noise. In this case, the generative model may generate an image with reference to input data (e.g., an image).

In an embodiment of the present disclosure, the electronic device may edit the image to reflect the intent of the user by inputting the embedding, instead of inputting a prompt to the generative model.

In an embodiment, the generative model may edit the image spatially, based on the embedding and a guidance scale matrix. For example, the image may be edited by applying "foreground creation" to some target regions of the image and "foreground removal" to other target regions. The generative model may be a model to which a CFG scheme has been applied to adjust the performance of the model.

A specific method by which the electronic device 1000 edits the image of the target region has been described above with reference to FIG. 7.

In operation S850, the electronic device 1000 may output a result image in which the image of the target region has been generated.

In an embodiment, the electronic device 1000 may display, on the screen, the result image generated using the generative model, through the display included in the electronic device 1000. In an embodiment, the electronic device 1000 may transmit the result image to another electronic device. For example, the electronic device 1000 may transmit the result image to another electronic device including a display, such that the result image is displayed on the other electronic device. There may be one or more output images.

A specific method by which the electronic device 1000 outputs the image has been described above with reference to FIG. 1.

According to the embodiments described above, because an image may be edited by reflecting an intent of a user without a text encoder for processing a prompt input, the amount of computation and memory usage of a generative model may be reduced. In addition, by utilizing a guidance scale in a matrix form, a plurality of target regions of an image may be edited through a single inference, thereby simplifying an inference process.

Hereinafter, a process of training an embedding will be described with reference to FIGS. 10 to 15. The embedding may be a value trained by the second electronic device 2000, or may be a value trained by another electronic device (not shown) and transmitted to the second electronic device 2000. The embedding may be a value pre-trained before an image editing process described with reference to FIGS. 1 to 8 is performed. By using the pre-trained embedding before the image editing process, memory and amount of computation used in the image editing process may be reduced.

According to an embodiment of the present disclosure, because the second electronic device 2000 uses the pre-trained embedding, the intent of the user 1 may be obtained without using a text encoder. Accordingly, by using the embedding pre-trained through processes to be described with reference to FIGS. 10 to 15, a generative model may be executed even in an electronic device having a relatively low specification, and thus, on-device of the generative model may be possible.

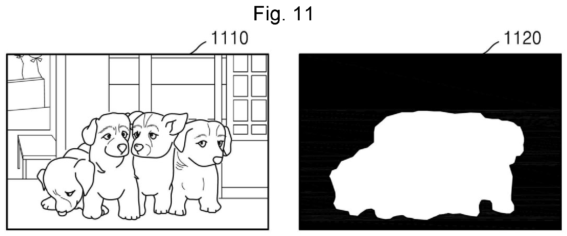

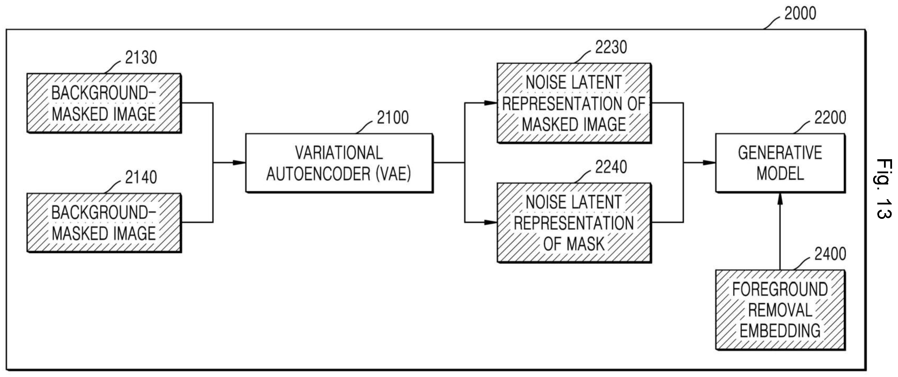

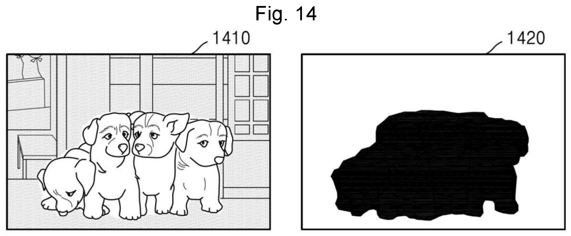

FIGS. 10 to 15 are diagrams illustrating processes of training an embedding, according to an embodiment of the present disclosure. FIGS. 10 to 12 are diagrams illustrating processes of training a foreground creation embedding, according to an embodiment of the present disclosure. FIGS. 13 to 15 are diagram illustrating processes of training a foreground removal embedding, according to an embodiment of the present disclosure. Referring to FIGS. 11 and 14, the second electronic device 2000 may include a VAE 2100 and a generative model 2200.

The modules 2100 and 2200 included in the second electronic device 2000 of FIGS. 10 and 13 are components classified based on functions or roles. The modules 2100 and 2200 of the second electronic device 2000 of FIGS. 10 and 13 may be software components implemented when a processor (not shown) of the second electronic device 2000 executes a program stored in memory (not shown), and may also be virtual components of which actually matching hardware devices do not exist. In other words, the operations performed when the processor (not shown) of the second electronic device 2000 executes the program or instructions stored in the memory (not shown) may be classified into a plurality of groups according to functions or purposes, and entities that perform the operations included in each classified group may be represented as the modules 2100 and 2200 of FIGS. 10 and 13. Accordingly, the operations described as being performed by the modules 2110 and 2120 of the second electronic device 2000 shown in FIGS. 10 and 13 may be regarded as being actually performed by the processor (not shown) of the second electronic device 2000 by executing the program or instructions stored in the memory (not shown).

Although FIGS. 10 and 13 illustrate that one second electronic device 2000 includes both the modules 2100 and 2200, the present disclosure is not limited thereto, and at least some of the modules 2100 and 2200 may be included in a separate device, or any one module thereof may be included in another module. As such, the modules 2100 and 2200 included in the second electronic device 2000 according to an embodiment of the present disclosure may be hardware components or software components, and may be implemented in any form of electronic devices (e.g., one electronic device or a combination of two or more electronic devices).

The second electronic device 2000 according to an embodiment of the present disclosure may be a user terminal (e.g., a smartphone, a laptop computer, or a desktop computer), but is not limited thereto, and may be a server that performs communication with the user terminal.

Components other than the modules 2100 and 2200 included in the second electronic device 2000 of FIGS. 10 and 13 may be data input to the modules and/or data output from the modules. The components other than the modules will be described in more detail as needed while describing the operation of each module.

According to an embodiment of the present disclosure, the second electronic device 2000 may perform the operations described below by combining the VAE 2100 and the generative model 2200. By combining the VAE 2100 and the generative model 2200, the second electronic device 2000 may use a latent space representation, which is an output of the VAE 2100, as an input of the generative model 2200. Accordingly, the generative model 2200 uses, as an input, data of a latent space that is of a lower dimension than a pixel space, and thus, the amount of computation required in a noise removal process may be reduced and training efficiency may be increased.

FIG. 10 is a diagram for explaining a process of training a foreground creation embedding, according to an embodiment of the present disclosure.

According to an embodiment of the present disclosure, the VAE 2100 generates a noised latent variable. The VAE 2100 may be trained through a process of encoding a foreground-masked image 2110 and a foreground-masked mask 2120 into a latent space and reconstructing the same.

According to an embodiment of the present disclosure, the VAE 2100 may obtain the foreground-masked image 2110 and the foreground-masked mask 2120. The VAE 2100 may obtain an input in which a foreground and a region other than the foreground are distinguished, through the foreground-masked image 2110 and the foreground-masked mask 2120. The VAE 2100 may obtain a plurality of foreground-masked images 2110. The VAE 2100 may obtain a plurality of foreground-masked masks 2120.

The foreground-masked mask 2120 refers to a binarized image in which a foreground and a background of an image in which the foreground is inside the mask are distinguished. In an embodiment of the present disclosure, the foreground-masked mask 2120 may be a mask in which the foreground is displayed in white and the background is displayed in black.

The foreground-masked image 2110 refers to an image obtained by combining the foreground-masked mask 2120 with an input image. For example, when the foreground-masked mask 2120 is the mask in which the foreground is displayed in white and the background is displayed in black, the foreground-masked image 2110 may be an image in which an image of a foreground portion remains as an original image and a background portion is filled with zeros.

The VAE 2100 may convert the foreground-masked image 2110 into a noise latent representation 2210 of a foreground-masked image. When the foreground-masked image 2110 is input to the VAE 2100, the VAE 2100 may convert (or map) the foreground-masked image 2110 defined in a pixel space into a probability distribution in a latent space. For example, the VAE 2100 may model the foreground-masked image 2110 as a latent variable to obtain the noise latent representation 2210 of the foreground-masked image. A latent variable z may be modeled as a normal distribution *N*(µ,σ²) having a mean µ 2 and a variance σ².

The VAE 2100 may sample the latent variable z by using a reparameterization trick. That is, the sampled latent variable z is based on the mean µ and a standard deviation σ, and may be expressed by an equation below.$z = μ + σε$

Here, ε is noise sampled from a standard normal distribution N(0, 1). Through this, the VAE 2100 may obtain a noised latent variable for the foreground-masked image 2110, that is, the noise latent representation 2210 of the foreground-masked image. The VAE 2100 may model the variability of the latent space by adding noise to the latent variable z and obtaining the noise latent representation 2210 of the foreground-masked image, and increase the diversity of generated data, thereby effectively representing the foreground-masked image 2110 in the latent space.

The VAE 2100 may convert the foreground-masked mask 2120 into a noise latent representation 2220 of the foreground-masked mask. When the foreground-masked mask 2120 is input to the VAE 2100, the VAE 2100 may convert (or map) the foreground-masked mask 2120 defined in a pixel space into a probability distribution in a latent space. For example, the VAE 2100 may model the foreground-masked mask 2120 as a latent variable. A latent variable *z*₂ of the foreground-masked mask may be modeled as a normal distribution *N*(µ₂,σ²) having a mean µ₂ and a variance σ².

The VAE 2100 may sample the latent variable *z*₂ by using a reparameterization trick. The sampled latent variable *z*₂ is based on the mean µ₂ and a standard deviation *σ*₂, and may be expressed by an equation below.${z}_{2} = {μ}_{2} + {σ}_{2} ε$

Here, ε is noise sampled from the standard normal distribution N(0, 1). Through this, the VAE 2100 may obtain a noised latent variable for the foreground-masked image 2110, that is, the noise latent representation 2220 of the foreground-masked mask. The VAE 2100 may model the variability of the latent space by adding noise to the latent variable *z*₂ and obtaining the noise latent representation 2220 of the foreground-masked mask, and increase the diversity of generated data, thereby effectively representing the foreground-masked mask 2120 in the latent space.

According to an embodiment of the present disclosure, the generative model 2200 may obtain the noise latent representation 2210 of the foreground-masked image and the noise latent representation 2220 of the foreground-masked mask. According to an embodiment of the present disclosure, the generative model 2200 may be a diffusion model. Hereinafter, it is assumed and described that the generative model 2200 is a diffusion model, but the type of the generative model 2200 is not limited to the diffusion model.

In a process of gradually removing noise from the noise latent representation 2210 of the foreground-masked image and the noise latent representation 2220 of the foreground-masked mask, the generative model 2200 may learn the meaning of filling the inside of a mask with a foreground. In the process of gradually removing noise from the noise latent representation 2210 of the foreground-masked image and the noise latent representation 2220 of the foreground-masked mask, the generative model 2200 may learn the meaning of filling the inside of a mask with a foreground in consideration of the shape and context of the mask.

In the process of gradually removing noise from the noise latent representation 2210 of the foreground-masked image and the noise latent representation 2220 of the foreground-masked mask, the generative model 2200 may set a foreground creation embedding 2300 as a direct optimization variable. In a process of filling the inside of the mask with the foreground by using the foreground creation embedding 2300, the generative model 2200 may optimize the foreground creation embedding 2300.

For example, the generative model 2200 may train the foreground creation embedding 2300 such that the foreground creation embedding 2300 has a value corresponding to an "operation of filling the inside of a mask with a foreground in consideration of the shape and context of the mask" by using, as inputs, a plurality of noise latent representations 2210 of foreground-masked images and a plurality of noise latent representations 2220 of foreground-masked masks. The generative model 2200 may be trained together while the foreground creation embedding 2300 is trained.

The second electronic device 2000 may, when the foreground creation embedding 2300 is input as a condition to the generative model 2200, train the foreground creation embedding 2300 such that the generative model 2200 creates a foreground in a mask region in consideration of the shape and context of a mask.

The second electronic device 2000 may store the foreground creation embedding 2300. For example, the second electronic device 2000 may store the foreground creation embedding 2300 in memory (not shown) of the second electronic device 2000. The second electronic device 2000 may transmit the foreground creation embedding 2300 stored in the memory (not shown) to the electronic device 1000. The electronic device 1000 may store the received foreground creation embedding 2300 in a database.

FIG. 11 is a diagram illustrating examples of a masked image and a mask used in a process of training a foreground creation embedding, according to an embodiment of the present disclosure.

Referring to FIG. 11, a first example 1110 may be an example of the foreground-masked image 2110. A second example 1120 may be an example of the foreground-masked mask 2120. Referring to FIG. 9, the VAE 2100 may obtain the first example 1110 and the second example 1120. The VAE 2100 may obtain a latent representation for the first example 1110 and a latent representation for the second example 1120. The generative model 2200 may train the foreground creation embedding 2300 by using the latent representation for the first example 1110 and the latent representation for the second example 1120. The generative model 2200 may also train a U-net of the generative model 2200 while the foreground creation embedding 2300 is trained.

In addition, the first example 1110 of FIG. 11 corresponds to the foreground-masked image 2110 of FIG. 10, and the second example 1120 corresponds to the foreground-masked mask 2120 of FIG. 10. Accordingly, redundant descriptions will be omitted for brevity.

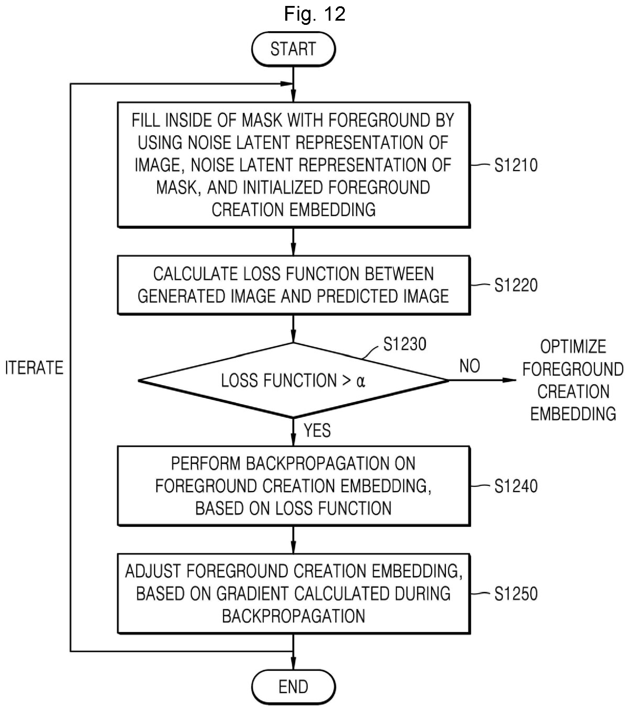

FIG. 12 is a diagram for explaining a process in which a second electronic device optimizes a foreground creation embedding and a generative model, according to an embodiment of the present disclosure.

Optimizing the foreground creation embedding 2300 may refer to adjusting the foreground creation embedding 2300 such that the generative model 2200 using the foreground creation embedding 2300 as a condition may fill the inside of a mask with a plausible foreground in consideration of the shape of the mask and the context of an image. By using the foreground creation embedding 2300 as a condition for the generative model 2200, the inside of the mask may be filled with the plausible foreground without having to input a prompt stating "fill the inside of the mask with the plausible in consideration of the shape of the mask and the context of the image".

In operation S1210, the second electronic device 2000 may fill the inside of the mask with the foreground by using the noise latent representation 2210 of the foreground-masked image, the noise latent representation 2220 of the foreground-masked mask, and the initialized foreground creation embedding 2300. The generative model 2200 may generate an image in which a masked region is filled with the foreground, by using the initialized foreground creation embedding 2300 as the condition. The generative model 2200 may consider the shape of the mask and the context of the image when filling the masked region with the foreground, based on the initialized foreground creation embedding 2300.

In operation S1220, the generative model 2200 may calculate a loss function between the image generated by the generative model 2200 in operation S1210 and a predicted image. A value of the loss function may indicate whether the generative model 2200 has appropriately filled the masked region by using the foreground creation embedding 2300.

In an embodiment of the present disclosure, the generative model 2200 may be a diffusion model. Accordingly, the generative model 2200 is described as a diffusion model in a process in which the generative model 2200 calculates the loss function, but the present disclosure is not limited thereto.

First, the concept of a general diffusion model of the related art, which serves as a basis for the diffusion model of the present disclosure, will be described. The diffusion model of the related art gradually adds random Gaussian noise ε according to a time step t in a forward diffusion process. This may be expressed as Equation (5) below. Equation (5) below describes a process of generating a latent space vector *zₜ* of a noise image at a time t at which noise is added to a latent space vector *z*₀ of an input image x0. ${z}_{t} = \sqrt{{α}_{t}} {z}_{0} + \sqrt{1 - {α}_{t}} ϵ , ϵ ∼ N \left(0, I\right)$ (5)

In Equation (5), α*ₜ* denotes a parameter representing noise corresponding to the time t.

The diffusion model of the related art estimates data *z*_{*t*-1} at a previous step t-1 from the latent space vector *zₜ* at the time step t, in a backward diffusion process. This may be expressed as Equation (6) below. Equation (6) below describes a process of estimating a vector *z*_{*t*-1} of a previous step by removing noise from a current vector *zₜ* in a backward movement from the time step t to the time step t-1. ${p}_{θ} \left(\left.{z}_{t - 1}\right|{z}_{t}\right) : = N \left({z}_{t - 1};{μ}_{θ}\left({z}_{t}, t\right),{\sum }_{θ} \left({x}_{t}, t\right)\right)$ (6)

Based on the above concept, the diffusion model of the related art uses a loss function of Equation (7) below. In a training process, the diffusion model of the related art may update and optimize a parameter θ of the diffusion model such that a calculated value of the loss function is minimized. Equation (7) below describes a process of calculating a difference between noise ε_{θ}(*z*_{*t*,}*t*) predicted by the model and ground truth noise ε*ₜ* by using a mean squared error (MSE). Equation (7) may be referred to as a first loss function. $L = {E}_{{z}_{0} , t , {ϵ}_{t}} \left[{\left‖{ϵ}_{t}-{ϵ}_{θ}\left({z}_{t}, t\right)\right‖}^{2}\right]$ (7)

In an embodiment, the diffusion model of the present disclosure uses an embedding in a backward diffusion process. Equation (8) below describes a process of calculating, using an MSE, a difference between noise predicted by the model and ground truth noise ε*ₜ*, when an embedding y is used in the backward diffusion process. The diffusion model according to an embodiment of the present disclosure may update and optimize a parameter θ of the diffusion model such that a calculated value of the loss function is minimized. Equation (8) may be referred to as a second loss function. The generative model 2200 may be trained (or optimized) in a process of minimizing a value of the second loss function. $L = {E}_{{z}_{0} , t , y , {ϵ}_{t}} \left[{\left‖{ϵ}_{t}-{ϵ}_{θ}\left({z}_{t}^{′}, y, t\right)\right‖}^{2}\right]$ (8)

In operation S1230, the generative model 2200 may determine whether the loss function calculated in operation S1120 exceeds a specific value α. When the loss function does not exceed the specific value α, the generative model 2200 may determine that the foreground creation embedding 2300 is optimized.

When the loss function exceeds the specific value α, the generative model 2200 may determine that the foreground creation embedding needs to be optimized and perform operation S1240.

In operation S1240, the generative model 2200 may perform backpropagation on the foreground creation embedding 2300, based on the loss function. In a process of performing the backpropagation, the generative model 2200 may calculate a gradient indicating how the foreground creation embedding 2300 is to be adjusted to optimize the foreground creation embedding 2300.

In operation S1250, the generative model 2200 may adjust the foreground creation embedding based on the calculated gradient. The generative model 2200 may update the foreground creation embedding 2300 based on the calculated gradient.

The generative model 2200 iterates operations S1210 to S1250 to optimize the foreground creation embedding 2300. The generative model 2200 iterates operations S1210 to S1250 until the loss function does not exceed the specific value α, thereby optimizing the foreground creation embedding 2300.

FIG. 13 is a diagram for explaining a process in which a foreground removal embedding is trained, according to an embodiment of the present disclosure.

According to an embodiment of the present disclosure, the VAE 2100 generates a noised latent variable. The VAE 2100 may be trained through a process of encoding a background-masked image 2130 and a background-masked mask 2140 into a latent space and reconstructing the same.

According to an embodiment of the present disclosure, the VAE 2100 may obtain the background-masked image 2130 and the background-masked mask 2140. The VAE 2100 may obtain an input in which a background and a region other than the background are distinguished, through the background-masked image 2130 and the background-masked mask 2140. The VAE 2100 may obtain a plurality of background-masked images 2130. The VAE 2100 may obtain a plurality of background-masked masks 2140.

The background-masked mask 2140 refers to a binarized image in which a background of an image in which the background is inside a mask and a region other than the background are distinguished. In an embodiment of the present disclosure, the background-masked mask 2140 may be a mask in which a background is represented in white (for example, a value of 1) and a foreground is represented in black (for example, a value of 0).

The background-masked image 2130 refers to an image obtained by combining the background-masked mask 2140 with an original image. For example, when the background-masked mask 2140 has the background represented in white (for example, a value of 1) and the foreground represented in black (for example, a value of 0), the background-masked image 2130 may be an image in which an image of a background portion is left as the original image, and a foreground portion is filled in black.

The VAE 2100 may convert the background-masked image 2130 into a noise latent representation 2230 of a background-masked image. When the background-masked image 2130 is input to the VAE 2100, the VAE 2100 may convert (or map) the background-masked image 2130 defined in a pixel space into a probability distribution in a latent space. For example, the VAE 2100 may model the background-masked image 2130 as a third latent variable to obtain the noise latent representation 2230 of the background-masked image. A third latent variable *z*₃ may be modeled as a normal distribution $N \left({μ}_{3}, {σ}_{3}^{2}\right)$ having a mean µ₃ and a variance ${σ}_{3}^{2}$.

The VAE 2100 may sample the third latent variable *z*₃ by using a reparameterization trick. The sampled latent variable *z*₃ is based on the mean µ₃ and a standard deviation σ₃, and may be expressed by an equation below.${z}_{3} = {μ}_{3} + {σ}_{3} ε$

Here, ε is noise sampled from the standard normal distribution N(0, 1). Through this, the VAE 2100 may obtain a noised latent variable for the background-masked image 2130, that is, the noise latent representation 2230 of the background-masked image. The VAE 2100 may model the variability of the latent space by adding noise to the latent variable z and obtaining the noise latent representation 2230 of the background-masked image, and increase the diversity of generated data, thereby effectively representing the background-masked image 2130 in the latent space.

The VAE 2100 may convert the background-masked mask 2140 into a noise latent representation 2240 of the background-masked mask. When the background-masked mask 2140 is input to the VAE 2100, the VAE 2100 may convert (or map) the background-masked mask 2140 defined in a pixel space into a probability distribution in a latent space. For example, the VAE 2100 may model the background-masked mask 2140 as a fourth latent variable. A fourth latent variable *z*₄ may be modeled as a normal distribution $N \left({μ}_{4}, {σ}_{4}^{2}\right)$ having a mean µ₄ and a variance ${σ}_{4}^{2}$.

The VAE 2100 may sample the fourth latent variable *z*₄ by using a reparameterization trick. The sampled latent variable *z*₄ is based on the mean µ₄ and a standard deviation σ₄, and may be expressed by an equation below.${z}_{4} = {μ}_{4} + {σ}_{4} ε$

Here, ε is noise sampled from the standard normal distribution N(0, 1). Through this, the VAE 2100 may obtain a noised latent variable for the background-masked mask 2140, that is, the noise latent representation 2240 of the background-masked mask. The VAE 2100 may model the variability of the latent space by adding noise to the latent variable *z*₄ and obtaining the noise latent representation 2240 of the background-masked mask, and increase the diversity of generated data, thereby effectively representing the background-masked mask 2140 in the latent space.

According to an embodiment of the present disclosure, the generative model 2200 may obtain the noise latent representation 2230 of the background-masked image and the noise latent representation 2240 of the background-masked mask. According to an embodiment of the present disclosure, the generative model 2200 may be a diffusion model. Hereinafter, it is assumed and described that the generative model 2200 is a diffusion model, but the type of the generative model 2200 is not limited to the diffusion model.

In a process of gradually removing noise from the noise latent representation 2230 of the background-masked image and the noise latent representation 2240 of the background-masked mask, the generative model 2200 may learn the meaning of not creating a foreground inside the mask. In an embodiment of the present disclosure, the generative model 2200 may learn the meaning of filling the inside of the mask by extending the background, in a process of gradually removing noise from the noise latent representation 2230 of the background-masked image and the noise latent representation 2240 of the background-masked mask.

In the process of gradually removing noise from the noise latent representation 2230 of the background-masked image and the noise latent representation 2240 of the background-masked mask, the generative model 2200 may set a foreground removal embedding 2400 as a direct optimization variable. The generative model 2200 may optimize the foreground removal embedding 2400, in a process of not creating a foreground inside the mask (or filling the inside of the mask by extending the background) by using the foreground removal embedding 2400.

For example, the generative model 2200 may train the foreground removal embedding 2400 such that the foreground removal embedding 2400 has a value corresponding to an operation of filling the inside of a mask by extending a background by using, as inputs, a plurality of noise latent representations 2230 of background-masked images and a plurality of noise latent representations 2240 of background-masked masks. The foreground removal embedding 2400 may be trained to have a value corresponding to an operation of filling the inside of the mask by extending the background, without creating a foreground inside the mask. The generative model 2200 may be trained together while the foreground creation embedding 2400 is trained.

The second electronic device 2000 may train the foreground removal embedding 2400 such that, when the foreground removal embedding 2400 is used as a condition for the generative model 2200, the generative model 2200 fills the mask by extending the background. The second electronic device 2000 may train the foreground removal embedding 2400 such that, when the foreground removal embedding 2400 is input as a condition to the generative model 2200, the generative model 2200 does not create a foreground inside the mask.

The second electronic device 2000 may store the foreground removal embedding 2400. For example, the second electronic device 2000 may store the foreground removal embedding 2400 in memory (not shown) of the second electronic device 2000. The second electronic device 2000 may transmit the foreground removal embedding 2400 stored in the memory (not shown) to the electronic device 1000. The electronic device 1000 may store the received foreground removal embedding 2400 in a database.

FIG. 14 is a diagram illustrating examples of a masked image and a mask used in a process in which a foreground removal embedding is trained, according to an embodiment of the present disclosure.

Referring to FIG. 14, a first example 1410 may be an example of the background-masked image 2130. A second example 1420 may be an example of the background-masked mask 2140. Referring to FIG. 12, the VAE 2100 may obtain the first example 1410 and the second example 1420. The VAE 2100 may obtain a latent representation for the first example 1410 and a latent representation for the second example 1420. The generative model 2200 may train the foreground removal embedding 2400 by using the latent representation for the first example 1410 and the latent representation for the second example 1420. The generative model 2200 may also train a U-net of the generative model 2200 while the foreground removal embedding 2400 is trained.

In addition, the first example 1410 of FIG. 14 corresponds to the background-masked image 2130 of FIG. 13, and the second example 1420 corresponds to the background-masked mask 2140 of FIG. 13. Accordingly, redundant descriptions will be omitted for brevity.

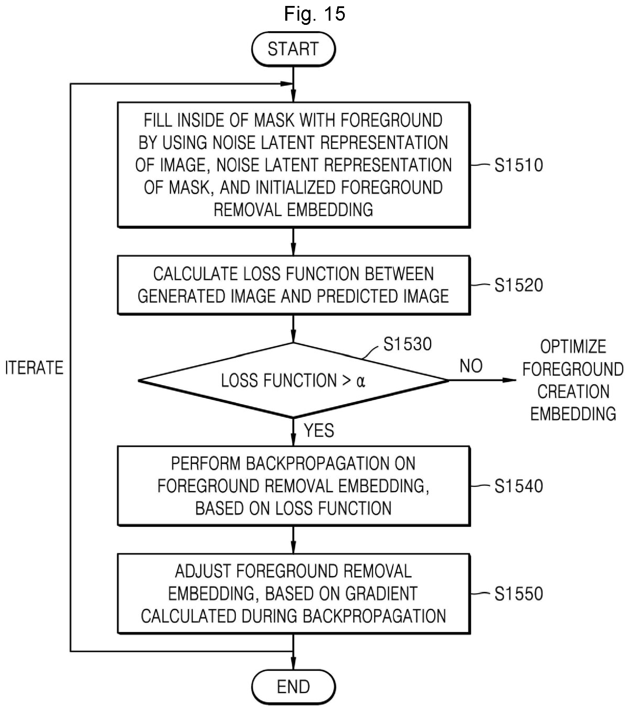

FIG. 15 is a diagram for explaining a process in which a second electronic device optimizes a foreground removal embedding and a generative model, according to an embodiment of the present disclosure.

Optimizing the foreground removal embedding 2400 may refer to adjusting the foreground removal embedding 2400 such that the generative model 2200 using the foreground removal embedding 2400 as a condition may fill the inside of the mask by extending the background of the image. By using the foreground removal embedding 2400 as a condition for the generative model 2200, the inside of the mask may be filled with a plausible background without having to input a prompt stating "do not create a foreground inside the mask, but extend the background of the masked image to fill the inside of the mask".

In operation S1510, the second electronic device 2000 may fill the inside of the mask with the background by using the noise latent representation 2230 of the background-masked image, the noise latent representation 2240 of the background-masked mask, and the initialized foreground removal embedding 2400. The generative model 2200 may generate an image in which the masked region is filled with the foreground, by using the initialized foreground removal embedding 2400 as the condition.

In operation S1520, the generative model 2200 may calculate a loss function between the image generated by the generative model 2200 in operation S1510 and a predicted image. A value of the loss function may indicate whether the generative model 2200 has appropriately filled the masked region by using the foreground removal embedding 2400. The loss function is calculated according to Equation (6). Operation S1520 may correspond to operation S1220, and a specific process of calculating the loss function will be omitted for brevity.

In operation S1530, the generative model 2200 may determine whether the loss function calculated in operation S1520 exceeds a specific value α. When the loss function does not exceed the specific value α, the generative model 2200 may determine that the foreground removal embedding 2400 is optimized.

When the loss function exceeds the specific value α, the generative model 2200 may determine that the foreground removal embedding needs to be optimized and perform operation S1540.

In operation S1540, the generative model 2200 may perform backpropagation on the foreground removal embedding 2400, based on the loss function. In a process of performing the backpropagation, the generative model 2200 may calculate a gradient indicating how the foreground creation embedding 2400 is to be adjusted to optimize the foreground creation embedding 2400.

In operation S1550, the generative model 2200 may adjust the foreground removal embedding based on the calculated gradient. The generative model 2200 may update the foreground removal embedding 2400 based on the calculated gradient.

The generative model 2200 iterates operations S1510 to S1550 to optimize the foreground removal embedding 2400. The generative model 2200 iterates operations S1510 to S1550 until the loss function does not exceed the specific value α, thereby optimizing the foreground removal embedding 2400.

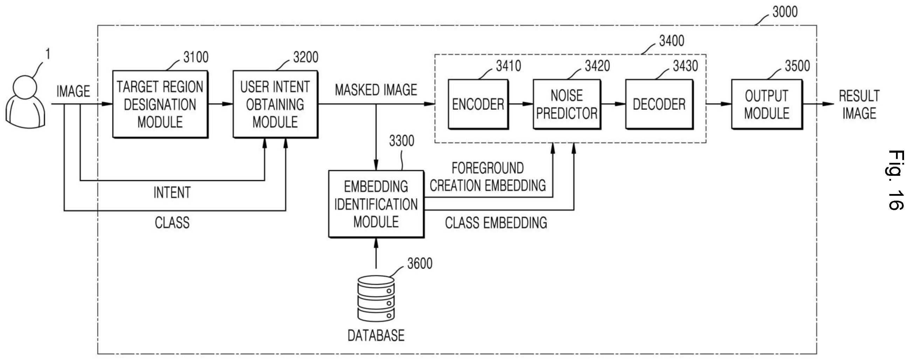

FIG. 16 is a diagram for explaining a process of editing an image by creating a foreground of a specific class and filling a target region with the foreground, according to an embodiment of the present disclosure. The operations of the electronic device 1000 described above with reference to the previous drawings may also be performed by a third electronic device 3000. Each element of FIG. 15 may correspond to that of FIG. 1, and thus, in FIG. 15, for the sake of brevity, only the differences from FIG. 1 will be mainly described.

A class refers to a category used to distinguish the type of a foreground. For example, the class may include classes for tangible objects such as a dog class, a cat class, a sunglasses class, and a human class. For example, the class may include a class for a natural phenomenon that is difficult to be described in detail by using a prompt. For example, the class may include a water class and a fire class.

In an embodiment of the present disclosure, class foreground creation may refer to creating a foreground of a specific class to fill a masked region of a masked image. For example, when a "cat" class is selected, the class foreground creation may refer to creating a cat foreground to fill the masked region of the masked image.

A class embedding refers to an embedding vector that a generative model uses as a condition to perform the "class foreground creation". The class embedding may be a value trained through a process of filling a foreground region of the masked image with the foreground of the specific class, by using, as training data, a masked image in which a foreground region of a specific class of an image is masked. The class embedding may be a pre-trained value. The class embedding may be a value pre-trained through textual inversion.

For example, the class embedding may be a value pre-trained to correspond to an operation of editing a masked region of an image by creating a foreground corresponding to a specific class. The pre-trained embedding may be an embedding trained by the electronic device 3000, or may be an embedding trained by the server 5000 and transmitted to the electronic device 3000.

A user intent obtaining module 3200 may correspond to the user intent obtaining module 200 of FIG. 1. When a foreground creation intent is included in intents obtained by the user intent obtaining module 3200, the user intent obtaining module 3200 may obtain, from the user 1, a class of a foreground to be created.

The user intent obtaining module 3200 may designate (select) the class of the foreground to be created in any manner, such as a method by which the user intent obtaining module 200 of FIG. 1 obtains a user input.

When the user intent obtaining module 3200 obtains the foreground creation intent and the class of the foreground to be created, an embedding identification module 3300 may identify, from a database 3600, a class embedding corresponding to the class to be generated.

A generative model 3400 may correspond to the generative model 400 of FIG. 1. The generative model 3400 may be a generative Al model for editing an image input by the user 1, based on an intent input by the user. For example, to edit the image based on the intent input by the user 1, the generative model 3400 may obtain, from the embedding identification module 3300, the class embedding corresponding to the class to be created when the intent of the user is a class creation intent.

In an embodiment of the present disclosure, the generative model 3400 may edit the image by using the class embedding as a condition during a noise prediction process of a noise predictor 3420. The generative model 3400 may use the class embedding as a condition to create the foreground of the class desired by the user and fill a target region. For example, the generative model 3400 may use a dog class embedding as a condition to create a foreground of a dog and fill the target region.

In an embodiment of the present disclosure, when filling the target region by using the class embedding, the generative model 3400 may create the foreground of the class in consideration of the shape of a mask and a context of the image, and fill the target region.

In an embodiment of the present disclosure, in the noise prediction process of the noise predictor 3420, a guidance scale in a matrix form may be used. By using the guidance scale in the matrix form in the noise prediction process, the image may be edited by reflecting the intent of the user spatially for each region. By using the guidance scale in the matrix form in the noise prediction process, the image may be edited by reflecting the intent of the user spatially through a single inference.

For example, the generative model 3400 may edit an image of a first target region by using a first class embedding, edit an image of a second target region by using a second class embedding, and edit an image of a third target region by using a foreground removal embedding.

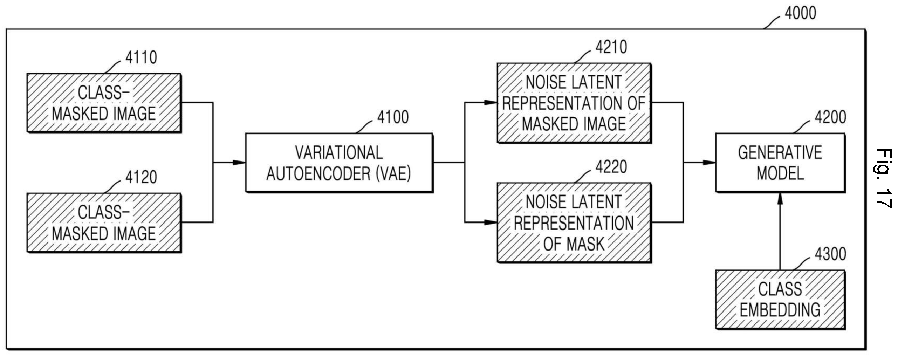

FIG. 17 is a diagram for explaining a process in which a class embedding is trained, according to an embodiment of the present disclosure. The operations of the second electronic device 2000 described above with reference to the previous drawings may also be performed by a fourth electronic device 4000. Each element of FIG. 17 may correspond to that of FIG. 10, and thus, in FIG. 17, for the sake of brevity, only the differences from FIG. 10 will be mainly described.

According to an embodiment of the present disclosure, a VAE 4100 may be trained through processes of encoding a foreground-masked image 4110 of a specific class and a foreground-masked mask 4120 of a specific class into a latent space, and reconstructing the same.

According to an embodiment of the present disclosure, the VAE 4100 may obtain the foreground-masked image 4110 of the specific class and the foreground-masked mask 4120 of the specific class. The VAE 3100 may obtain an input in which a foreground of a specific class and a region other than the foreground are distinguished, through the foreground-masked image 4110 and the foreground-masked mask 4120. The VAE 4100 may obtain a plurality of foreground-masked images 4110 of the specific class. The VAE 4100 may obtain a plurality of foreground-masked masks 2120 of the specific class.

The foreground-masked mask 4120 of the specific class refers to a binarized image in which a foreground and a background of an image in which the foreground of a specific class is inside the mask are distinguished. In an embodiment of the present disclosure, the foreground-masked mask 4120 of the specific class may be a mask in which the foreground is displayed in white and the background is displayed in black. For example, a foreground-masked mask of a dog class may refer to a mask that is binarized by masking a dog region of an image.

The foreground-masked image 4110 of the specific class refers to an image obtained by combining the foreground-masked mask 4120 of the specific class with an input image. For example, when the foreground-masked mask 4120 of the specific class is the mask in which the foreground is displayed in white and the background is displayed in black, the foreground-masked image 4110 of the specific class may be an image in which an image of a foreground portion remains as an original image and a background portion is filled with zeros.

The VAE 4100 may convert the foreground-masked image 4110 of the specific class into a noise latent representation 4210 of the foreground-masked image of the specific class. A process in which the VAE 4100 converts the foreground-masked image 4110 of the specific class into the noise latent representation 4210 of the foreground-masked image of the specific class is performed through a process similar to the process in which the VAE 4100 converts the foreground-masked image 4110 into the noise latent representation 4210 of the foreground-masked image described with reference to FIG. 10, and descriptions thereof will be omitted herein for brevity.

The VAE 4100 may convert the foreground-masked mask 3120 of the specific class into a noise latent representation 4220 of the foreground-masked mask of the specific class. A process in which the VAE 4100 converts the foreground-masked mask 4120 of the specific class into the noise latent representation 4220 of the foreground-masked mask of the specific class is performed through a process similar to the process in which the VAE 2100 converts the foreground-masked mask 2120 into the noise latent representation 2220 of the foreground-masked mask described with reference to FIG. 10, and descriptions thereof will be omitted herein for brevity.

In a process of gradually removing noise from the noise latent representation 4220 of the foreground-masked image of the specific class and the noise latent representation 4220 of the foreground-masked mask of the specific class, a generative model 4200 may learn the meaning of filling the inside of a mask with a foreground of the specific class. In the process of gradually removing noise from the noise latent representation 4220 of the foreground-masked image of the specific class and the noise latent representation 4220 of the foreground-masked mask of the specific class, the generative model 4200 may set a class embedding 4300 as a direct optimization variable. The generative model 4200 may optimize the class embedding 4300 in a process of filling the inside of the mask with the foreground of the specific class by using the class embedding 4300. A process of optimizing the class embedding 4300 is performed through a process similar to the process of optimizing the foreground creation embedding 4300 described with reference to FIG. 10, and descriptions thereof will be omitted herein for brevity.

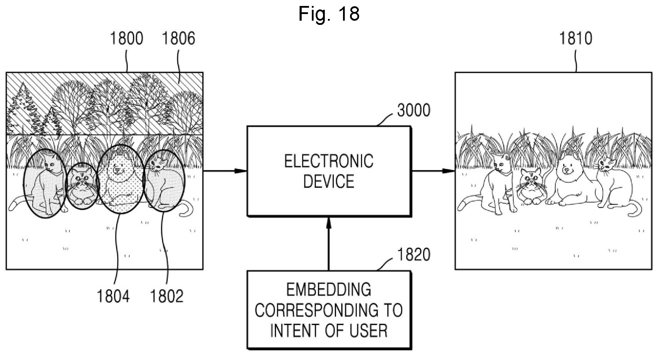

FIG. 18 is a diagram for illustrating an example of editing an image by using a class embedding, according to an embodiment of the present disclosure.

In an embodiment, the third electronic device 3000 may provide a user with a service for synthesizing an image by using a generative model. The third electronic device 3000 may edit an input image 1800 by using the generative model 3400 and output the same. The electronic device 3000 may receive, from the user, a user input for designating partial regions of the input image 1800 as target regions 1802, 1804, and 1806. The electronic device 3000 may receive, from the user, an intent for each of the target regions 1802, 1804, and 1806 of the input image. The electronic device 3000 may edit an image by using the generative model, based on an embedding 1820 corresponding to the intent of the user, and output a result image 1810.

In an embodiment, the result image 1810 output by the third electronic device 3000 may be generated by reflecting the intent of the user to perform class foreground creation or foreground removal on the input image for each target region of the input image. In an embodiment of the present disclosure, the third electronic device 3000 may perform foreground creation or foreground removal on each of a first target region 1802, a second target region 1804, and a third target region 1806, and output the result image 1810.

For example, the generative model 3400 may edit an image of the first target region 1802 by using a cat class embedding, edit an image of the second target region 1804 by using a dog class embedding, and edit an image of the third target region 1806 by using a foreground removal embedding. The generative model 3400 may obtain the result image 1810 in which the first target region 1802 is filled with a cat foreground, the second target region 1804 is filled with a dog foreground, and a tree in the third target region 1806 is removed and a sky is expanded and filled in the third target region 1806.

To this end, the third electronic device 3000 may use the generative model of the present disclosure, which is specialized for a task of editing an image reflecting a plurality of intents of the user in a single rendering by applying, for each target region, the intent of the user to create a foreground of a specific class or to remove a foreground. The third electronic device 3000 may be the same device as or a different device from the electronic device 1000.

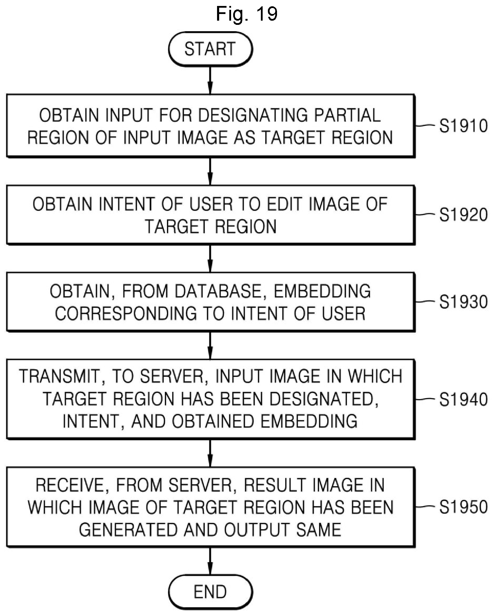

FIG. 19 is a flowchart for explaining an electronic device operating in conjunction with a server, according to an embodiment of the present disclosure.

In an embodiment, the electronic device 1000, the second electronic device 2000, the third electronic device 3000, or the fourth electronic device 4000 may operate using a cloud-based Al scheme in which a composite image is received from a generative model executed in the server 5000, rather than generating a composite image by operating a generative model in an on-device manner. Although following description is provided using the electronic device 1000 as an example, the same description may be applied to the second electronic device 2000, the third electronic device 3000, or the fourth electronic device 4000.

Operations S1910 and S1920 of FIG. 19 may correspond to operations S810 and S820 of FIG. 8. Accordingly, redundant descriptions will be omitted for brevity.

In operation S1930, the electronic device 1000 may obtain, from a database, an embedding corresponding to the intent of the user. The database may be included in the electronic device 1000 or may be included in the server 5000.

In operation S1940, the electronic device 1000 may transmit, to the server 5000, the input image in which the target region has been designated. The input image in which the target region has been designated may be the image obtained in S1910. The input image in which the target region has been designated may be an image in which the target region is masked.

In an embodiment, when the target region in the input image and the intent of the user corresponding to each target region are identified and the foreground creation or foreground removal is considered for the target region, the electronic device 1000 may transmit, to the server 5000, the intent of the user and the embedding corresponding to the intent. The transmitted intent of the user may be the intent itself, or may be a mask matrix set in a masked image, based on the intent of the user.

In operation S1950, the electronic device 1000 may receive, from the server 5000, a result image in which an image of the target region has been generated. The electronic device 1000 may output the received result image. For example, the electronic device 1000 may display the result image on the screen of the electronic device 1000, or may transmit the result image to another electronic device 1000.

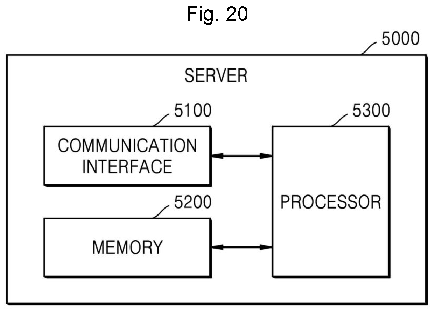

FIG. 20 is a block diagram illustrating a configuration of a server, according to an embodiment of the present disclosure.

In an embodiment, the server 5000 may include a communication interface 5100, memory 5200, and a processor 5300. The operations of the electronic device 1000, the second electronic device 2000, the third electronic device 3000, and the fourth electronic device 4000 described above with reference to the previous drawings may also be performed by the server 5000.

The communication interface 5100, the memory 5200, and the processor 5300 of the server 5000 in FIG. 20 may respectively correspond to the communication interface 5100, the memory 5200, and the processor 5300 of the electronic device 1000 in FIG. 3. Accordingly, redundant descriptions will be omitted for brevity.

According to embodiments described above, by using an embedding corresponding to an intent of a user as a condition for a generative model without an input of a prompt, the amount of computation and the amount of required memory of the generative model may be reduced. In addition, by using a guidance scale in a matrix form, an image may be edited by reflecting an intent of a user for each target region through a single inference process.

According to an aspect of the present disclosure, a method by which an electronic device edits an image may be provided.

According to an aspect of the present disclosure, a method, performed by an electronic device, of editing an image may be provided. The method may include obtaining an input for designating, as a target region, a partial region of an input image. The method may include obtaining an intent of a user to edit an image of the target region. The method may include obtaining, from a database, an embedding corresponding to the intent of the user. The method may include editing the image of the target region through a generative model by using the obtained embedding. The method may include outputting a result image in which the image of the target region has been generated. An embedding corresponding to at least one intent may be pre-stored in the database.

According to an aspect of the present disclosure, the embedding may be pre-trained to correspond to an operation of editing a masked region of an image, based on the intent of the user.

According to an aspect of the present disclosure, the intent of the user may include a foreground creation intent to edit (or fill) the target region by creating a foreground. The intent of the user may include a foreground removal intent to edit (or fill) the target region by extending a background.

According to an aspect of the present disclosure, the embedding may include a foreground creation embedding trained to correspond to an operation of editing the image of the target region by creating a foreground. The embedding may include a foreground removal embedding trained to correspond to an operation of editing the image of the target region by extending a background.

According to an aspect of the present disclosure, the foreground creation embedding may be trained, by using, as training data, an image in which a foreground region is masked and a mask in which the foreground region is masked such that the foreground creation embedding corresponds to an operation of creating a foreground based on a shape of the mask and a context of the image and filling the masked region of the image with the foreground.

According to an aspect of the present disclosure, the foreground removal embedding may be trained, by using, as training data, an image in which a background region is masked and a mask in which the background region is masked such that the foreground removal embedding corresponds to an operation of extending the background and filling the masked region of the image with the background.

According to an aspect of the present disclosure, the editing of the image of the target region through the generative model may include generating initial noise. According to an aspect of the present disclosure, the editing of the image of the target region through the generative model may include editing an image of at least one target region by repeating, starting from the initial noise, noise prediction and predicted noise removal for each time step. The noise prediction may use a weighted combination of a conditional prediction and an unconditional prediction, using the embedding corresponding to the intent of the user.

According to an aspect of the present disclosure, the weighted combination may be based on a guidance scale in a matrix form. The conditional prediction may use an embedding corresponding to the intent of the user individually identified for the at least one target region.

According to an aspect of the present disclosure, the guidance scale in the matrix form may be a product of a weight value and a pixel-wise ternary matrix of a masked image corresponding to the target region.

According to an aspect of the present disclosure, the outputting of the result result image in which the image of the target region has been generated may include combining the edited image of the target region and the input image of a region other than the target region. The outputting of the result result image in which the image of the target region has been generated may include outputting a result of the combination as the result image.

According to an aspect of the present disclosure, the method may further include, when the foreground creation intent is obtained, obtaining a class of the foreground to be created. The method may further include obtaining, from the database, an embedding corresponding to the class of the foreground.

According to an aspect of the present disclosure, the editing of the image of the target region may include editing the image of the target region through the generative model by using the foreground creation embedding and the embedding corresponding to the class of the foreground. The embedding corresponding to a class of at least one foreground may be pre-stored in the database.

According to an aspect of the present disclosure, an electronic device for editing an image may be provided. The electronic device may include a communication interface, at least one processor including a circuit device, and memory storing at least one instruction. The electronic device may include a display.

The embedding may be pre-trained to correspond to an operation of editing a masked region of an image, based on the intent of the user.

The intent of the user may include a foreground creation intent to edit the target region by creating a foreground. The intent of the user may include a foreground removal intent to edit the target region by extending a background.

The embedding may include a foreground creation embedding trained to correspond to an operation of editing the image of the target region by creating the foreground.

The embedding may include a foreground removal embedding trained to correspond to an operation of editing the image of the target region by extending the background.

The foreground creation embedding may be trained, by using, as training data, an image in which a foreground region is masked and a mask in which the foreground region is masked such that the foreground creation embedding corresponds to an operation of creating a foreground based on a shape of the mask and a context of the image and filling the masked region of the image with the foreground.

The foreground removal embedding may be trained, by using, as training data, an image in which a background region is masked and a mask in which the background region is masked such that the foreground removal embedding corresponds to an operation of extending the background and filling the masked region of the image with the background.

The at least one instruction, when executed by the at least one processor, may cause the electronic device to generate initial noise. The at least one instruction, when executed by the at least one processor, may cause the electronic device to edit an image of at least one target region by repeating, starting from the initial noise, noise prediction and predicted noise removal for each time step. The noise prediction may use a weighted combination of a conditional prediction and an unconditional prediction, using the embedding corresponding to the intent of the user.

The weighted combination may be based on a guidance scale in a matrix form. The conditional prediction may use an embedding corresponding to the intent of the user individually identified for the at least one target region.

The guidance scale in the matrix form may be a product of a weight value and a pixel-wise ternary matrix of a masked image corresponding to the target region.

The at least one instruction, when executed by the at least one processor, may cause the electronic device to combine the edited image of the target region and the input image of a region other than the target region. The at least one instruction, when executed by the at least one processor, may cause the electronic device to output a result of the combination as the result image.

The at least one instruction, when executed by the at least one processor, may cause the electronic device to obtain, when the obtained intent of the user includes the foreground creation intent, a class of the foreground to be created. The at least one instruction, when executed by the at least one processor, may cause the electronic device to obtain, from the database, an embedding corresponding to the class of the foreground.

The at least one instruction, when executed by the at least one processor, may cause the electronic device to edit the image of the target region through the generative model, by using the embedding corresponding to the intent of the user and the embedding corresponding to the class of the foreground. The embedding corresponding to a class of at least one foreground may be pre-stored in the database.

The embodiments of the present disclosure may also be realized in the form of a recording medium including instructions executable by a computer, such as a program module executed by a computer. A computer-readable medium may be an arbitrary available medium accessible by a computer, and includes all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium may typically include other data of a modulated data signal, such as a computer-readable instruction, a data structure, or a program module.

The computer-readable storage medium may be provided in the form of a non-transitory storage medium. Here, the term "non-transitory storage medium" only denotes a tangible device and does not contain a signal (e.g., electromagnetic waves), and this term does not distinguish between a case where data is semi-permanently stored in the storage medium and a case where data is temporarily stored in the storage medium. For example, the "non-transitory storage medium" may include a buffer in which data is temporarily stored.

According to an embodiment, a method according to various embodiments disclosed in the present specification may be provided by being included in a computer program product. The computer program product may be traded between a seller and a buyer as a commodity. The computer program product may be distributed in the form of a machine-readable storage medium (e.g., compact disc read only memory (CD-ROM)), or may be distributed (e.g., downloadable or uploadable) online via an application store or between two user devices (e.g., smart phones) directly. When distributed online, at least part of the computer program product (e.g., a downloadable application) may be at least temporarily stored or temporarily generated in the machine-readable storage medium, such as a memory of the manufacturer's server, a server of the application store, or a relay server.

The above description of the present disclosure is provided for illustration, and it will be understood by one of ordinary skill in the art that various changes in form and details may be readily made therein without departing from essential features and the scope of the present disclosure as defined by the following claims. Accordingly, embodiments described above are examples in all aspects and are not limited. For example, each element described as a single type may be implemented in a distributed manner, and similarly, elements described as distributed may be implemented in a combined form.

The scope of the present disclosure is defined by the appended claims rather than the detailed description, and all changes or modifications within the scope of the appended claims and their equivalents will be construed as being included in the scope of the present disclosure.

## Claims

1. A method, performed by an electronic device, of editing an image, the method comprising:
obtaining an input for designating, as a target region, a partial region of an input image;
obtaining an intent of a user to edit an image of the target region;
obtaining, from a database, an embedding corresponding to the intent of the user;
editing the image of the target region through a generative model by using the obtained embedding; and
outputting a result image in which the image of the target region has been generated,
wherein an embedding corresponding to at least one intent is pre-stored in the database.

2. The method of claim 1, wherein
the embedding is
pre-trained to correspond to an operation of editing a masked region of an image, based on the intent of the user.

3. The method of claim 1 or 2, wherein
the intent of the user comprises
a foreground creation intent to edit the image of the target region by creating a foreground, or a foreground removal intent to edit the image of the target region by extending a background.

4. The method of any one of claims 1 to 3, wherein the embedding comprises:
a foreground creation embedding trained to correspond to an operation of editing the image of the target region by creating a foreground; and
a foreground removal embedding trained to correspond to an operation of editing the image of the target region by extending a background.

5. The method of claim 4, wherein
the foreground creation embedding is trained, by using, as training data, an image in which a foreground region is masked and a mask in which the foreground region is masked, such that the foreground creation embedding corresponds to an operation of creating a foreground, based on a shape of the mask and a context of the image, and filling the masked region of the image with the foreground.

6. The method of claim 4 or 5, wherein
the foreground removal embedding is trained, by using, as training data, an image in which a background region is masked and a mask in which the background region is masked, such that the foreground removal embedding corresponds to an operation of extending the background and filling the masked region of the image with the background.

7. The method of any one of claims 1 to 6, wherein
the editing of the image of the target region through the generative model comprises:
generating initial noise; and
editing an image of at least one target region by repeating, starting from the initial noise, noise prediction and predicted noise removal for each time step,
wherein the noise prediction uses a weighted combination of a conditional prediction and an unconditional prediction, using the embedding corresponding to the intent of the user.

8. The method of claim 7, wherein
the weighted combination is
based on a guidance scale in a matrix form, and
the conditional prediction uses an embedding corresponding to the intent of the user individually identified for the at least one target region.

9. The method of claim 7 or 8, wherein
the guidance scale in the matrix form is
a product of a weight value and a pixel-wise ternary matrix of a masked image corresponding to the target region.

10. The method of any one of claims 1 to 9, wherein
the outputting of the result result image in which the image of the target region has been generated comprises:
combining the edited image of the target region and the input image of a region other than the target region; and
outputting a result of the combination as the result image.

11. An electronic device (1000) for editing an image, the electronic device (1000) comprising:
a communication interface (1100);
memory (1200) storing at least one instruction; and
at least one processor (1300) comprising a circuit device,
wherein the at least one instruction, when executed by the at least one processor (1300), causes the electronic device (1000) to:
obtain an input for designating, as a target region, a partial region of an input image;
obtain an intent of a user to edit an image of the target region;
obtain, from a database, an embedding corresponding to the intent of the user;
edit the image of the target region through a generative model by using the obtained embedding; and
output a result image in which the image of the target region has been generated,
wherein an embedding corresponding to at least one intent is pre-stored in the database.

12. The electronic device (1000) of claim 11, wherein
the embedding is
pre-trained to correspond to an operation of editing a masked region of an image, based on the intent of the user.

13. The electronic device (1000) of claim 11 or 12, wherein
the intent of the user comprises
a foreground creation intent to edit the target region by creating a foreground or a foreground removal intent to edit the target region by extending a background.

14. The electronic device (1000) of any one of claims 11 to 13, wherein
the embedding comprises:
a foreground creation embedding trained to correspond to an operation of editing the image of the target region by creating the foreground; and
a foreground removal embedding trained to correspond to an operation of editing the image of the target region by extending the background.

15. A computer-readable recording medium having recorded thereon a program for performing, on a computer, the method of any one of claims 1 to 10.
